(19) Europäisches Patentamt
European Patent Office
Office européen des brevets

(11) EP 4 016 761 B1

(12) EUROPEAN PATENT SPECIFICATION

(45) Date of publication and mention of the grant of the patent:
04.02.2026 Bulletin 2026/06

(21) Application number: 20386058.0

(22) Date of filing: 18.12.2020

(51) International Patent Classification (IPC):
H01S 3/30 (2006.01)      H01S 3/06 (2006.01)
H01S 3/08031 (2023.01)   H01S 3/094 (2006.01)
H01S 3/07 (2006.01)      H01S 3/082 (2006.01)
H01S 3/083 (2006.01)     H01S 3/0947 (2006.01)
H01S 3/102 (2006.01)

(52) Cooperative Patent Classification (CPC):
H01S 3/08031; H01S 3/0627; H01S 3/094038;
H01S 3/30; H01S 3/0604; H01S 3/0606; H01S 3/07;
H01S 3/082; H01S 3/083; H01S 3/094076;
H01S 3/094084; H01S 3/0947; H01S 3/1022;
H01S 3/1028

(54) **DEVICE, SYSTEM AND METHOD FOR PRODUCING A SINGLE LONGITUDINAL MODE LASER OUTPUT**

VORRICHTUNG, SYSTEM UND VERFAHREN ZUR ERZEUGUNG EINES EINZIGEN LONGITUDINALEN LASERAUSGANGS

DISPOSITIF, SYSTÈME ET PROCÉDÉ DE PRODUCTION D'UNE SORTIE LASER À MODE LONGITUDINAL UNIQUE

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(43) Date of publication of application:
22.06.2022 Bulletin 2022/25

(73) Proprietor: CERN - European Organization For Nuclear Research
1211 Geneva 23 (CH)

(72) Inventors:
• Fedosseev, Valentin N.
1211 Geneva 23 (CH)
• Mildren, Richard P.
North Ryde NSW 2109 (AU)
• Chrysalidis, Katerina
1211 Geneva 23 (CH)
• Granados, Mateo, Eduardo
1211 Geneva 23 (CH)

(74) Representative: D Young & Co LLP
3 Noble Street
London EC2V 7BQ (GB)

(56) References cited:
CN-A- 103 779 766

• VASILI G SAVITSKI ET AL: "Steady-State Raman Gain in Diamond as a Function of Pump Wavelength", IEEE JOURNAL OF QUANTUM ELECTRONICS, IEEE SERVICE CENTER, PISCATAWAY, NJ, USA, vol. 49, no. 2, 1 February 2013 (2013-02-01), pages 218 - 223, XP011488171, ISSN: 0018-9197, DOI: 10.1109/JQE.2012.2237505
• FEIGEL BENJAMIN ET AL: "Modeling and design of infrared and ultraviolet integrated diamond ring Raman lasers", PROCEEDINGS OF SPIE; [PROCEEDINGS OF SPIE ISSN 0277-786X VOLUME 10524], SPIE, US, vol. 9894, 27 April 2016 (2016-04-27), pages 989414 - 989414, XP060069851, ISBN: 978-1-5106-1533-5, DOI: 10.1117/12.2225221
• LISINETSKII ET AL: "The generation of high pulse and average power radiation in eye-safe spectral region by the third stokes generation in barium nitrate Raman laser", OPTICS COMMUNICATIONS, ELSEVIER, AMSTERDAM, NL, vol. 281, no. 8, 3 January 2008 (2008-01-03), pages 2227 - 2232, XP022504299, ISSN: 0030-4018, DOI: 10.1016/J.OPTCOM.2007.12.016

**Description**

## BACKGROUND

A "single longitudinal mode laser" (sometimes referred to as a "single-wavelength" or "single frequency" laser) is a laser in which operation is based on a single resonator longitudinal mode. This means that it emits quasi-monochromatic radiation with a very small linewidth and low phase noise. As a direct consequence, such lasers exhibit a very long coherence length of greater than 10 metres and up to 1000 metres. Typical applications of single-frequency lasers occur in the areas of optical metrology (e.g. with fibre-optic sensors) and interferometry. Other applications include optical data storage, high-resolution spectroscopy, light detection and ranging (LIDAR), holography, and laser communication, amongst others.

Conventional techniques for producing a single longitudinal mode laser output are subject to a number of problems such as mode competition, which is mainly caused by spatial hole burning in a standing-wave resonator with inhomogeneous gain distribution. This effect is intrinsically unstable since it operates as negative feedback and complicates the single-frequency laser design and operation. Such complications are generally addressed by designing elaborate optical arrangements requiring the use of multiple optical elements within the laser cavities, cavity length stabilization and the use of different interferometric devices (e.g. optical gratings) for the spectral control of emitted light. However, this means that single longitudinal mode generation is particularly sensitive to external disturbances, and can be difficult to achieve.

VASILI G SAVITISKI ET AL: "Steady-State Raman Gain in Diamond as a Function of Pump Wavelength", IEEE JOURNAL OF QUANTUM ELECTRONICS, IEEE SERVICE CENTER PISCATAWAY, NJ, USA, vol. 49, no. 2, 1 February 2013 (2013-02-01), pages 218-223, ISSN: 0018-9197, DOI: 10.1109/JQE.2012.2237505 discloses measurement of the variation in the Raman gain coefficient in single-crystal diamond for pump wavelengths between 355 and 1450 nm. CN 103 779 766 A discloses a single-frequency solid Raman laser. FEIGEL BENJAMIN ET AL: "Modeling and design of infrared and ultraviolet integrated diamond ring Raman lasers", PROCEEDINGS OF SPIE; [PROCEEDINGS OF SPIE ISSN 0277-786X VOLUME 10524], SPIE, US, vol. 9894, 27 April 2016, 2016-04-27, pages 989414-989414, DOI: 10.1117/12.2225221 ISBN: 978-1-5106-1533-5 discloses numerical investigation of the capabilities and advantages of Raman lasers based on integrated single-crystal diamond ring resonators.

It would be desirable to increase the ease of single longitudinal mode laser generation, and in particular, to allow ease of adjustment - or "tuning" - of the frequency of the laser output.

## SUMMARY OF THE INVENTION

The invention is set out in the appended set of claims.

The laser conversion device according to the present invention utilises the nonlinear inelastic Raman effect to shift the frequency of the laser pump input. When pumped by a "pump" laser, the Raman medium emits Stokes photons that are Raman shifted with respect to the laser pump input. When the frequency difference between the pump photons and the Stokes photons corresponds to an energy of a specific vibrational or rotational transition within the Raman medium (phonon energy), the emission of the Stokes photons is increased. In this manner, the Raman medium may be referred to as a Raman "gain" medium.

As will be explained in more detail below, the free spectral range (FSR) of the resonator is such that only a single longitudinal resonator mode for a particular Stokes order (e.g. a particular Stokes emission) is able to resonate efficiently within the Raman medium, thereby producing a single longitudinal mode - or single frequency - output with small linewidth. In other words, only a single longitudinal resonator mode is able to resonate efficiently within the resonator defined by the Raman medium ("Raman resonator").

In this way, the device of the present invention allows Raman conversion of conventional broadband lasers to a single longitudinal mode output where the conventional broadband laser acts as the pump laser providing the laser pump input. Thus, the device of the present invention finds particular utility when provided as an attachment, or "add-on", to an existing broadband laser (which may or may not be tunable) in order to produce a SLM laser output with reduced linewidth (typically less than <1GHz). The output of the laser conversion device may also provide increased power spectral density, increased wavelength coverage and improved beam quality (e.g. longer coherence length) as compared to the existing pump laser. The existing (pump) laser is preferably a pulsed laser. However, other pump lasers may be used, such as amplitude modulated or continuous wave lasers. Examples of conventional lasers that may be used to pump the device include a fixed wavelength Q-switched laser, a tuneable nanosecond pulse laser, or a tuneable continuous-wave laser.

It is noted that although the device of the present invention has particular utility when used to convert an existing broadband laser to a SLM output with reduced linewidth and (typically) increased power spectral density, the device can generate a SLM laser output when subject to pumping by a narrowband, SLM, laser pump input. In such cases, although the output from the device is a single longitudinal mode, the power spectral density may not be enhanced as compared to the pump.

The Raman medium is configured to define feedback interfaces of a resonator. In this way, the Stokes emission is fed back (e.g. reflected) at the feedback interfaces and resonates completely within the Raman medium ("Raman resonator"). In other words, the standing wave is generated substantially completely within the Raman medium rather than within a cavity resonator defined by separate optical elements positioned externally to the Raman medium. In this way, the Raman medium may be considered to define the resonator. In other words, the Raman medium simultaneously acts as a Raman gain medium and as a resonator. This may be referred to an "integrated" design of the resonator.

This feature of the present invention advantageously means that single longitudinal mode lasing operation may be achieved without the use of active feedback stabilisation mechanisms, or complex optical arrangements to provide the Stokes feedback. The use of a Raman medium defining feedback interfaces of the resonator advantageously means that the device is intrinsically stable and does not require mechanical feedback control. This also allows increased ease of maintenance.

Herein, the term "resonator" is used to convey that the resonator exhibits resonance or resonant behaviour; that is, radiation within the resonator naturally oscillates with greater amplitude at some frequencies (resonant frequencies) than other frequencies. The device will lase when the gain is greater than the losses within the resonator.

In general, a sufficient condition for single longitudinal mode operation is that the free spectral range (FSR) of the resonator (e.g. defined by the Raman medium) is greater than the effective gain linewidth of the Raman medium. The effective gain linewidth ($\Delta\omega_S$) of the Raman medium is defined as the sum of the pump laser linewidth ($\Delta\omega_F$) and the Raman linewidth ($\Delta\omega_R$), which is due to phonon damping and is a property of the Raman medium):

$$\Delta\omega_S = \Delta\omega_F + \Delta\omega_R$$

The effective gain linewidth is the spectral range that can support Stokes output (above lasing threshold). Longitudinal modes adjacent to the mode resonating within the Raman resonator are spectrally positioned outside the effective gain linewidth of the Raman medium, and therefore remain below the lasing threshold.

The laser pump input is coupled into the Raman medium with an intensity great enough such that the device operates in the coherent Raman scattering regime. In this regime, the pump and Stokes fields are highly correlated. In this way, the phonon field is coherently driven to its steady-state value, with the correct phonon phase to coherently scatter the fundamental photons of the laser pump input into the Stokes field. For moderate ($\Delta\omega_F$ - $\Delta\omega_R$) to large ($\Delta\omega_F \gg \Delta\omega_R$) pump laser linewidths in the coherent scattering regime, the Stokes spectrum strongly resembles the laser pump spectrum, and the Raman effective gain linewidth is substantially equal to the linewidth of the laser pump input; hence the effective gain linewidth reduces to $\Delta\omega_S \sim \Delta\omega_F$. This ensures that the maximum Raman gain is achieved, and hence the coherent scattering regime may also be referred to as the "high gain" regime.

When operating in the high gain regime and where $\Delta\omega_S \sim \Delta\omega_F$ the FSR of the resonator may be minimised for SLM operation. This is advantageous, since the FSR of the resonator is inversely proportional to its length, and consequently the resonator length may be increased while maintaining single longitudinal mode operation. Increasing the length of the resonator advantageously allows the device of the present invention to attain the same gain when pumped with lower intensity pump lasers, as well as increasing the confocal parameter of the resonator. This increases the ease with which the "integrated" Raman resonator of the present invention may be implemented.

For narrow pump laser linewidths in the high gain regime ($\Delta\omega_F \to 0$), gain narrowing produces an effective gain linewidth reduced to:

$$\Delta\omega_S = \Delta\omega_R*[\ln2/(g_0 I_F z)]^{0.5}$$

For cases where the intensity of the pump laser input is not great enough to operate in the high gain regime (and therefore the device operates in the "low gain regime"), for narrow pump laser linewidths, the Raman effective gain linewidth is substantially equal to the Raman linewidth ($\Delta\omega_S \sim \Delta\omega_R$), for moderate pump laser linewidths $\Delta\omega_S = \Delta\omega_F + \Delta\omega_R$; and for large pump laser linewidths, the Raman effective gain linewidth is substantially equal to the pump linewidth ($\Delta\omega_S \sim \Delta\omega_F$).

The coherent scattering regime may be achieved when the laser pump input has an intensity great enough that $g_0 I_F L > 8$ wherein $g_0$ is the (monochromatic) Raman gain of the Raman medium, $I_F$ is the laser pump input beam intensity (typically averaged over fast phase fluctuations) and L is the gain length (typically the optical path length of the resonator)

Thus, in this way, by configuring the FSR of the resonator (e.g. by configuring the Raman medium) with respect to (e.g. such that the FSR of the resonator is greater than) the pump linewidth and the Raman linewidth, a single longitudinal mode laser output is generated by the device of the present invention. The free spectral range of the resonator is greater than the pump linewidth. Under such conditions, the inventors have obtained good SLM results. Thus, in a particularly preferred embodiment of the invention there is provided a Raman laser conversion device for generating a single longitudinal mode, SLM, laser output, comprising: a Raman medium that exhibits a Stokes emission when subject to pumping by a laser pump input, the laser pump input having a pump linewidth; wherein the Raman medium is configured to define feedback interfaces of a resonator such that the Stokes emission resonates within the Raman medium; and further wherein the free spectral range, FSR, of the resonator is greater than the pump linewidth; whereby the laser conversion device generates a SLM laser output that is frequency shifted with respect to the laser pump input.

The device of the present invention may generate Fourier limited pulses from pump pulses with an arbitrary spectral phase distribution. Since the Raman effect is an "automatically phase matched process", or in other words, the conversion from pump to Stokes depends only on the envelopes of the pump and Stokes fields (rather than their phases), the output Stokes pulse phase will be dictated by the Raman resonator dispersion characteristics and degree of correlations between fields. For the case of conversion from moderate or large linewidth pump lasers to single longitudinal mode output, this means that the Stokes linewidth will approach the Fourier transform limit of the temporal envelope of the pump laser pulse.

The Raman medium may in general be any material that may provide stimulated Raman emission, for example diamond or Silicon. The Raman medium is preferably a solid state Raman medium. Preferably, the Raman medium is a (typically monolithic) diamond crystal. Diamond is particularly advantageous since it is a highly stable Raman material and provides high Raman gain, it has a large transparency range from UV to the near Infra-Red, a high damage threshold thereby enabling power scalability, and a high refractive index allowing reflection of the Stokes at its uncoated surfaces. Furthermore, diamond has a small thermal expansion coefficient, enabling stable operation.

Preferred properties of a diamond crystal include low birefringence (typically $\Delta n < 10^{-5}$) and low nitrogen concentration (typically less than 50 parts per billion, preferably between 20-40 parts per billion). Further preferred properties of the monolithic diamond crystal include low absorption (preferably less than 0.005 cm$^{-1}$ at 1064 nm), low roughness (preferably Ra < 5nm) and high flatness of reflecting surfaces (Peak-Valley < 1 Fringe at 633nm).

As discussed above, the integrated nature of the Raman medium defining feedback interfaces of a resonator advantageously means that single mode operation may be achieved using less complex arrangements than the prior art. Furthermore, this feature allows increased ease of adjustment, or "tuning" of the SLM output generated by the device, by varying a parameter of the Raman medium (and hence varying a parameter of the resonator). This will consequently change the Stokes emission able to resonate within the Raman medium, and thus the centre wavelength of the resonator.

In general, the tuning may be achieved by adjusting any property (or "parameter") of the Raman material that will adjust the Stokes emission that is able to resonate efficiently, for example physical length, refractive index, group index and Raman shift. Therefore, in preferred embodiments of the present invention, the laser conversion device further comprises an actuator configured to adjust at least one parameter of the resonator (e.g. adjusting at least one parameter of the Raman medium) so as to adjust the frequency (wavelength) of the SLM output. The actuator is preferably configured to adjust the optical path length defined by the resonator.

This is a particularly advantageous feature of the present invention, since such "tuning" of a single frequency laser conventionally relies either on tuning of the pump laser, or requires a complex system with a multitude of components requiring fine tuning, and is therefore typically expensive to achieve. The use of an actuator configured to adjust a parameter of the resonator (for example by adjusting the temperature of the Raman medium) advantageously provides a simple means of "tuning" the SLM frequency output by the device.

Such tuning of the device according to the invention may be performed continuously by continuous adjustment of the desired parameter(s). Thus, this feature of the invention may be referred to as "continuous" adjustment or "continuous" tuning of the single frequency laser output. This feature of the present invention may provide continuous tuning within the free spectral range of the resonator (typically in the GHz range).

A preferred manner of providing tunability of the laser conversion device is through the means of adjusting the temperature of the Raman medium. Consequently, in preferred embodiments the actuator comprises means for adjusting the temperature of the Raman medium (e.g. a temperature controller). The Raman medium may be placed in a temperature-controllable oven for example, controlled by a temperature controller. Providing heat energy to the Raman medium may impose a change to the centre wavelength of the resonator through one or more of: changing the physical length of the resonator via thermal expansion; inducing a change of group index; changing the refractive index of the Raman medium for each specific wavelength; and changing the Raman shift of the Raman medium. The temperature of the Raman medium may be adjusted in a range between room temperature (~293K) and 1200K. A preferred range of temperature adjustment of the Raman medium ("temperature tuning") is between 303K and 373K.

It can be shown that the output frequency tuning of the device due to thermal expansion can be calculated approximately as $\Delta v \sim 2\Delta T \alpha_L c/\lambda_S$, where $\Delta T$ is the change in temperature, $\alpha_L$ is the expansion coefficient, c is the speed of light and $\lambda_S$ is the Stokes wavelength.

In embodiments, the output frequency of the device may be stabilised (e.g. within ~10MHz), over time, by controlling the temperature of the Raman medium. Such control is typically provided using a feedback loop (typically a closed feedback loop).

Alternatively or in addition, the device may comprise one or more of: (i) a pressure actuator; (ii) an acoustic wave actuator, (iii) a magnetic field input, (iv) a voltage input, and (iv) a position controller configured to adjust the position of the Raman medium with respect to the pump laser input. These exemplary actuators may also provide tuning of the laser conversion device.

A pressure actuator may be used to apply a pressure or stress to the Raman medium in order to adjust the refractive index through birefringence and/or the piezoelectric effect, and thereby adjust the wavelength of the single frequency laser output. Typical pressures that may be applied to provide tuning are of the order of GPa, for example in the range of -20GPa to 20GPa, although pressures of less than 1GPa in magnitude may be used. Similar changes may be introduced through the application of a voltage (electric field) or acoustic waves to the Raman medium. Application of a magnetic field may provide frequency tuning (e.g. by a change the refractive index of the Raman medium through the magnetorefractive effect). Typical magnetic field strengths that may be applied to provide tuning are in the range of 0.1T to 1.5T, preferably between 0.5T and 1.5T. An electric field may be applied in the range of up to $10^6$V/cm.

A position controller may be used to adjust the position of the Raman medium with respect to the laser pump input. This may include changing the angle of the Raman medium with respect to the pump laser input (more specifically, change the angle of the surface of the Raman medium that the pump laser is incident upon) so as to change the propagation axis of the pump laser input along the Raman medium (e.g. from a linear resonator configuration to a ring resonator configuration). As well as allowing tuning of the output wavelength, adjusting the angle of the Raman medium with respect to the pump laser input may also affect the polarization and gain properties of the device.

As explained above, the Raman medium is configured to define feedback interfaces of the resonator. Typically, a feedback interface comprises the surface of the Raman medium, and thereby the Raman medium may be seen as defining feedback surfaces of the resonator. In other words, the Stokes emission is fed back (e.g. reflected) at the interface between the surface of the Raman medium and the surrounding environment. In a preferred example, the Stokes emission is reflected at the interface between the surface of the Raman medium and the surrounding atmosphere; in other words the Stokes emission is fed back by the uncoated surface of the Raman medium. Such configurations allow for a particularly simple device. Resonators formed in this way may be referred to as "monolithic" resonators. Indeed, if the Raman gain is larger than the Fresnel losses induced by the surfaces of the Raman medium, an uncoated Raman medium may start lasing automatically when pumped. In such examples, the device comprises a resonator that consists essentially of a Raman medium (e.g. a diamond crystal).

It is envisaged that the Raman medium may be in the form of a photonic crystal-based resonator. In such examples, the Stokes output may be fed back within the resonator due to the refractive index difference within the photonic crystal structure.

In embodiments, at least one feedback interface comprises a feedback element that is configured to increase the feedback of the Stokes output at that interface. A feedback element may be integrated into the surface of the Raman medium. Such feedback elements may be dispersive elements such as gratings (e.g. multilayer or volume Bragg gratings). These may be integrated into the surface of the Raman medium by surface nano-structuring.

The device may comprise a feedback element that is in (e.g. intimate) contact with a surface of the Raman medium. Such a feedback element may comprise a mirror, reflecting surface, coating or dispersive element (as discussed above) that is applied (e.g. bonded) to the surface of the Raman medium. In other words, there is no gap (either air or vacuum) between the feedback element and the Raman medium, and consequently the Stokes output is fed back at the interface between the surface of the Raman medium and the feedback element. Suitable coatings include multi-layer dielectric or metallic coatings. In general, a feedback element may be any element that helps to recirculate light within the resonator by any means.

Such feedback elements preferably have increased reflectivity at the pump and Stokes wavelengths in comparison to other wavelengths, in order to enhance the amplification process of the desired Stokes. Furthermore, at least one feedback element may have a lower reflectivity at the Stokes order of interest (i.e. the desired output of the device), whereby the SLM light of the device may be output from the resonator. The feedback elements may comprise at least one polarizer configured to polarise the laser pump input beam such that the single frequency laser output is at the desired Stokes output. Depending on the propagation direction within the Raman medium, the Stokes and pump may have different polarizations. In such case, it is desirable to ensure that the polarization of the reflected Stokes beam is parallel to the axis that provides the maximum Raman gain.

Typically, where feedback elements are used, each feedback interface defined by the Raman medium will comprise a feedback element. In such embodiments, the device comprises a resonator that consists essentially of a Raman medium and the feedback element(s).

Preferably, the device further comprises a pump feedback element configured to feed back the pump laser into the Raman medium. Such a pump feedback element advantageously increases the efficiency of the conversion process. In some embodiments, such a pump feedback element may also be configured to feedback the Stokes emission into the Raman medium. As well as advantageously increasing the efficiency of the conversion process, feeding back the Stokes emission also allows the single frequency laser output to be output at one end of the device. For example, the pump feedback element may be positioned on a distal side of the Raman medium to the laser pump input, such that the SLM output of the device is counter-propagating with the laser pump input. The pump feedback element is preferably spaced from the Raman medium (resonator), although in some embodiments may be in (e.g. intimate) contact with the surface of the Raman medium.

Preferably, the geometry of the Raman medium is configured to define an optical path length of the resonator for a particular (single) (longitudinal) resonator mode (i.e. of the Stokes emission). For example, in a linear resonator configuration comprising two substantially opposing parallel feedback interfaces, the optical path length (or "effective length") of the resonator corresponds to the geometric length between the feedback interfaces.

Typically, the Raman medium has a linear geometry so as to define a linear resonator of the Fabry-Pérot type. In such a configuration, the two opposing feedback interfaces of the resonator are substantially flat (non-curved) and parallel with each other (e.g. within 0.1 degree). A typical length of the Raman medium in such a linear resonator configuration is between 4mm and 6mm, preferably 5mm. However, other feedback element configurations and Raman medium geometries are envisaged. For example, one or more surfaces of the Raman medium may be shaped in order to enhance the feedback of the Stokes, e.g. by implementing one or more curved reflecting surfaces. In such examples, the Raman resonator may operate as a monolithic spherical resonator, or monolithic confocal resonator, depending on the radius of curvature.

The geometry of the Raman medium may allow different optical path lengths of the resonator, for example by resonating the Stokes within a rectangular Raman medium using four feedback interfaces (surfaces) in a "ring resonator" configuration. In another example, the Raman medium may have a toroidal shape, allowing "whispering gallery" modes to resonate.

The properties of the Raman medium are chosen such that resonance of a desired Stokes wavelength occurs. As well as the geometry of the Raman medium defining the optical path length of the resonator for a particular resonator mode, parameters such as the Raman shift, Raman linewidth, Raman gain, Raman dephasing time, group index and refractive index may be chosen in such a way that a particular resonator mode resonates within the Raman medium.

Pumping of the Raman medium by the laser pump input may generate higher order Stokes outputs (e.g. Stokes emissions) such as second order, third order Stokes emissions. It is envisaged that in some examples, single mode operation of more than one Stokes order may be possible simultaneously. In such scenarios, only one longitudinal mode at each Stokes order is able to resonate efficiently within the Raman medium.

In some embodiments, the device further comprises a second Raman medium coupled to the first Raman medium via a coupling feedback interface, wherein the second Raman medium is configured to define feedback interfaces of a second resonator. The (e.g. reflective) coupling feedback interface means that coupled Raman mediums act as separate, discrete resonators. The coupling feedback interface may be in the form of the uncoated faces of the coupled Raman mediums (with the Raman mediums being in intimate contact), although may comprise a feedback element such as a dichroic mirror, grating or reflective coating.

The two (or more) resonators are typically formed from the same Raman material (e.g. each resonator is a diamond crystal).

The use of a device comprising two or more resonators coupled in this way advantageously enables the pump linewidth from which a SLM laser output may be generated by the device to be increased as compared to using a single resonator arrangement.

Preferably, the optical path length of each of the resonators is substantially equal to an integer number of half wavelengths of the resonating single longitudinal mode. Such a device is preferably designed to work at the "unison", meaning that the effective lengths of each Raman medium are configured such that a single longitudinal mode resonates in all resonators simultaneously.

In such scenarios, the device effectively comprises three resonators, with the third resonator being defined by the combined length of the first and second resonators. For example, in a linear configuration with the first and second resonators arranged axially ("end on end"), the feedback interfaces of the third resonator are defined by the first feedback interface (surface) of the first resonator, and the last feedback interface (surface) of the second resonator. In this way, the length of the third resonator is maximised. Such a setup advantageously has reduced effective losses during the oscillation of the Stokes due to the enhanced feedback of the combined resonator. The third resonator defined by the combined length of the first and second resonators increases the amplification length, advantageously enhancing the gain and efficiency of the device, which still produces a single longitudinal mode output.

In some embodiments where the device comprises two (or more) Raman mediums, the SLM laser output of the first resonator may seed the second resonator, which acts as an amplifier. In such examples, the free spectral range of the second resonator is configured to be smaller than the pump linewidth.

In another example, each Raman resonator may be configured such that its FSR is greater than the pump linewidth (assuming coherent scattering regime operation), with each of the resonators feeding each other.

So far we have described the laser conversion device of the present invention in an "extra cavity" setup, i.e. being used as an attachment to existing broadband lasers. However, the device may also be used in a "standalone", or "intra-cavity" setup. Accordingly, in a second aspect of the invention, there is provided a Raman laser system for generating a single longitudinal mode, SLM, laser output, comprising: a pump laser configured to provide a laser pump input, the laser pump input having a pump linewidth; and a Raman laser conversion device according to the first aspect of the invention discussed above, configured to receive the laser pump input.

The pump laser may be a pulsed, amplitude modulated or continuous wave laser; for example, a fixed wavelength Q-switched laser, a tuneable nanosecond pulse laser, or a tuneable continuous-wave laser. The pump laser is preferably a pulsed laser.

Preferably, the laser system further comprises a focussing element configured to focus the laser pump input into the Raman medium with an intensity great enough such that the device operates in the coherent Raman scattering regime. Typically, the focussing element is configured to focus the laser pump input into the Raman medium with an intensity great enough that $g_0 I_F L > 8$ wherein $g_0$ is the (monochromatic) Raman gain of the Raman medium, $I_F$ is the laser pump input beam intensity (typically averaged over fast phase fluctuations) and L is the gain length (typically the optical path length of the resonator). The inventors have found this condition to be preferable because under these conditions the Raman gain will be high for broad pump laser linewidths of up to $\Delta\omega_F \sim 10^*\Delta\omega_{R_1}$.

The free spectral range of the resonator is greater than the pump linewidth. Thus, in the high gain regime, this condition allows a single longitudinal mode laser output to be generated by the laser conversion device of the laser system.

As has been discussed above, adjustment of at least one parameter of the resonator beneficially allows tuning of the single frequency laser output within the free spectral range of the resonator. Tuning beyond the free spectral range ("coarse" tuning) may be achieved by tuning the pump laser used to pump the Raman medium. In embodiments, the system may further comprise means for tuning at least one parameter of the pump laser so as to adjust the frequency of the output of the device. Examples of parameters of the pumping laser include the wavelength, intensity, and linewidth.

In accordance with a third aspect of the present invention there is provided a method of generating a single longitudinal mode, SLM, laser output, the method comprising: receiving a laser pump input at a Raman laser conversion device so as to generate a SLM laser output that is frequency shifted with respect to the laser pump input, wherein the laser pump input has a pump linewidth and the Raman laser conversion device comprises: a Raman medium that exhibits a Stokes emission when subject to pumping by the laser pump input, the Raman medium having a Raman linewidth; wherein the Raman medium is configured to define feedback interfaces of a resonator such that the Stokes emission resonates within the Raman medium; and further wherein the free spectral range, FSR, of the resonator with respect to the pump linewidth and the Raman linewidth is such that only one longitudinal mode of the Stokes emission is able to resonate within the Raman medium; whereby the laser conversion device generates a SLM laser output that is frequency shifted with respect to the laser pump input. The intensity of the laser pump input is great enough such that the device operates in the coherent Raman scattering regime, and the FSR of the resonator is greater than the pump linewidth of the laser pump input.

The Raman medium may comprise an input portion via which the laser pump input is received and an output portion via which the generated SLM laser is output.

## BRIEF DESCRIPTION OF THE DRAWINGS

Embodiments of the invention will now be described with reference to the accompanying drawings, in which:

Figure 1 is a perspective view schematically illustrating the concept of a laser conversion device according to the invention;

Figure 2 is a schematic diagram illustrating a laser conversion device according to an embodiment of the invention;

Figure 3 shows the ratio between effective gain and monochromatic gain, as a function of $g_0 I_F L$, for different ratios of $\Delta\omega_F/\Delta\omega_R$

Figure 4 schematically illustrates a Raman laser system according to an embodiment of the invention;

Figure 5 is a plot illustrating the conversion efficiency of the pump laser into Stokes power;

Figure 6(a) is a plot showing the time response of both the pump and Stokes pulses, and Figure 6(b) shows the Fourier transform of the Stokes pulse;

Figure 7 is a Fabry-Pérot interferometer scan for measured Stokes pulses (best fit Lorentzian function) in comparison with a frequency-stabilised continuous wave HeNe laser;

Figures 8(a) and 8(b) illustrate the measured bandwidth for the pump and Stokes pulses, respectively;

Figures 9(a) to 9(c) illustrate of the relationship between the pump wavelength and the Stokes output wavelength;

Figure 10 is a plot illustrating the relative power spectral densities of the pump and Stokes pulses;

Figure 11 is a schematic diagram illustrating an embodiment of the invention;

Figure 12 illustrates the temperature dependence of the output wavelength as a function of temperature;

Figures 13 to 16 schematically illustrate different resonator geometries that may be used in the present invention;

Figures 17 to 19 schematically illustrate devices comprising multiple coupled resonators;

Figures 20(a) and 20(b) illustrate measurements of pump linewidth and SLM output linewidth, respectively, obtained using the setup illustrated in Figure 11;

Figures 21(a) and 21(b) illustrate wavelength stabilisation of the SLM output using a closed loop temperature feedback control;

Figure 22 is a plot of intensity against frequency for a SLM output generated by an embodiment of the invention, when pumped with a narrowband SLM pump laser; and

Figure 23 illustrates SLM output tuning with temperature in an embodiment when the device is pumped by a narrowband SLM pump laser.

## DETAILED DESCRIPTION

### 1. Overview

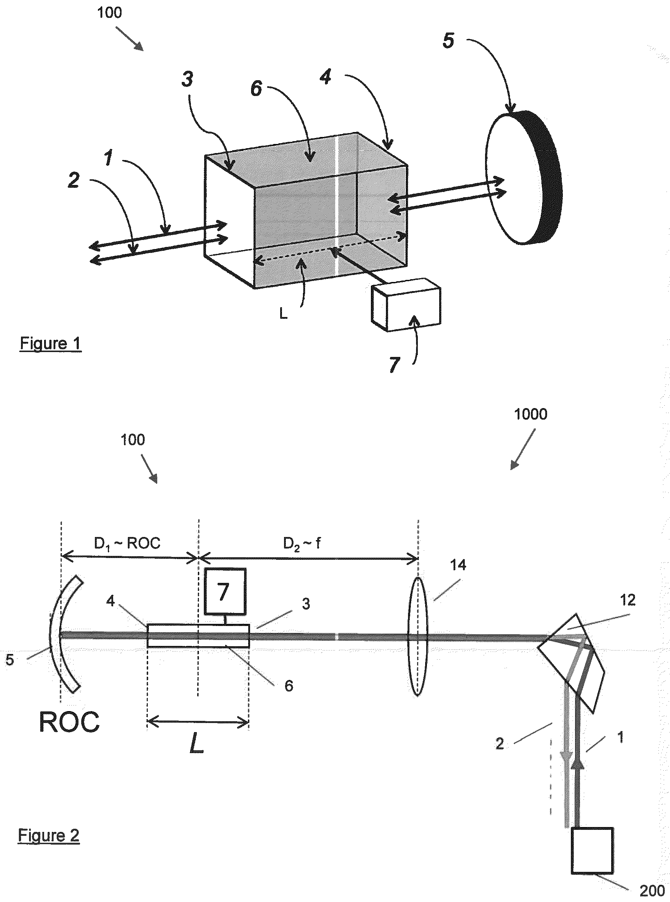

Figure 1 is a diagram schematically illustrating the concept of a Raman laser conversion device 100 according to an embodiment of the invention.

The device 100 comprises a Raman medium 6 (in this case a monolithic diamond crystal) that has substantially opposing and substantially parallel flat end faces 3, 4. The diamond 6 is pumped by a laser pump input 1, whereby one or more Stokes order (e.g. first and higher Stokes order) output pulses 2 are emitted due to inelastic Raman scattering. The laser pump input 1 may be provided by a conventional broadband pulsed or amplitude modulated laser such as a dye laser (not shown).

The Stokes emissions are fed back within the Raman medium 6 by the uncoated end surfaces 3, 4 of the diamond. In this manner, the diamond defines feedback interfaces 3, 4 of a resonator having an optical path length - or effective length - L, i.e. the surfaces 3, 4 are spaced by a length L. Thus, a particular longitudinal resonator mode of the Stokes is able to resonate within the integrated resonator defined by the Raman gain medium.

The Stokes pulses 2 are wavelength-shifted relative to the wavelength of the laser pump input in accordance with the Raman shift of the Raman medium.

A pump mirror 5 is positioned spaced from the diamond 6 on a distal side of the diamond to the laser pump input, and is configured to feed back the pump 1 into the diamond 6 in order to provide good overlap integral and maximise the efficiency of the conversion process. In this example the pump mirror 5 is a dichroic mirror configured to prevent the Stokes output from surface 4 being reflected and potentially lasing between the pump mirror 5 and first surface 3. The SLM output of the device 100 is illustrated at 2, and in this configuration is collinear and counter-propagating with respect to the pump laser input 1.

The device 100 further comprises a temperature controller (schematically represented at 7) configured to adjust the temperature of the Raman medium in order to provide adjustment ("tuning") of the output wavelength 2. A more detailed explanation of the effect of temperature on the output of the device is given further below.

Figure 2 is a schematic diagram illustrating a Raman laser system 1000 according to an embodiment of the invention, with a schematic illustration of the beam paths through the system. Here, a pump laser 200 provides a collimated laser pump input 1 which is directed through a Pellin-Broca prism before being focussed into the Raman medium 6 (again, a diamond crystal) by focussing element 14 (typically a convex lens). The lens 14 is positioned at a distance $d_2$ from the centre of the diamond that is approximately equal to the lens focal length, such that the laser pump input is focussed to a beam waist in the centre of the Raman medium 6.

In the same manner as Figure 1, the uncoated end surfaces 3, 4 of the diamond crystal 6 feed back the Stokes emissions within the Raman resonator. However, in alternative embodiments it is envisaged that feedback elements may be used to enhance the reflection of the Stokes, for example planar mirrors crystal bonded to the end surfaces 3, 4 of the diamond crystal 6.

The lens 14 is configured to focus the laser pump input 1 into the diamond 6 with an intensity great enough such that the device 100 operates in the coherent scattering regime. In this regime, the fundamental field (produced by the laser pump input) becomes correlated with the Stokes field. Under such a condition, for moderate ($\Delta\omega_F$ - $\Delta\omega_R$) to large ($\Delta\omega_F \gg \Delta\omega_R$) pump linewidths the Stokes spectrum strongly resembles the fundamental spectrum, and thus the effective gain linewidth is considered equivalent to the fundamental (laser pump) linewidth; i.e. $\Delta\omega_S \sim \Delta\omega_F$. Thus, in the high gain limit, for single mode operation the free spectral range of the resonator is configured to be greater than the laser pump linewidth, such that modes adjacent to the mode resonating within the resonator fall outside the effective gain linewidth and below the lasing threshold.

The FSR of the linear resonator 6 illustrated in Figures 1 and 2 is given by:

$$\Delta\omega_{FSR} = \frac{\pi c}{n_g L}$$

where c is the speed of light in a vacuum, $n_g$ is the group index of the Raman medium, and L is the length of the Raman resonator. Thus, the FSR of the Raman resonator may be configured based on the group index and length of the Raman medium.

The Coherent Raman Scattering Regime may be achieved when

$$g_0 I_F z L > 8,$$

where $g_0$ is the monochromatic Raman gain of the Raman material, $I_F$ the pump intensity, and L is the gain length (which here corresponds to the length of the linear Raman resonator). The approximation is valid for moderate to large pump linewidths: $0.1 < \Delta\omega_F/\Delta\omega_R < 10$, where $\Delta\omega_F/\Delta\omega_R$ is the ratio between the pump laser linewidth and the Raman linewidth.

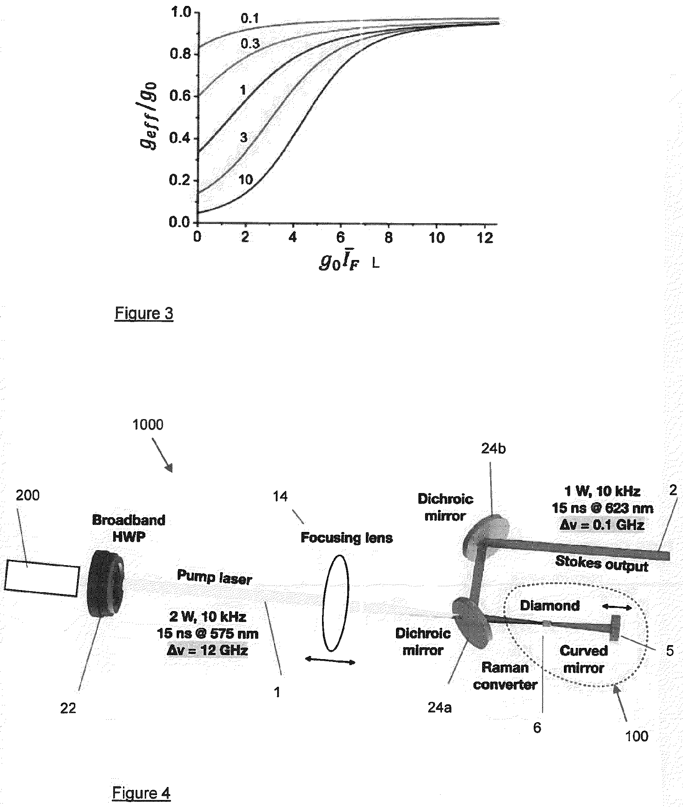

This condition is illustrated in Figure 3, which shows the ratio between the effective gain $g_{eff}$ and monochromatic Raman gain $g_0$ as a function of $g_0 I_F L$ for varying linewidth ratios $\Delta\omega_F/\Delta\omega_R$ between 0.1 and 10. As can be seen from the graph, the effective gain approaches $g_0$ (high gain limit) for values of $g_0 I_F L$ greater than 8.

Referring back to Figure 2, the pump mirror 5 is typically concave and is positioned at a distance $d_1$ from the centre of the resonator 6 that is approximately equal to its radius of curvature ROC.

In the configurations illustrated in Figures 1 and 2, the Raman medium (diamond) has a cuboidal shape. Consequently, the feedback surfaces 3, 4 are substantially opposing, substantially parallel (wedge angle less than 0.1 degrees) and define a resonator having a linear geometry, similar to an etalon. However, different geometries of the Raman medium may be used, for example defining a ring resonator, or a toroidal shape that allows resonance of whispering modes. Such alternative geometries will be described in further detail below.

The present invention enables multiple Stokes single frequency operation simultaneously, effectively implying multiple monochromatic outputs at different wavelengths simultaneously. It is noted that the first order Stokes emissions seed the second order Stokes and so on, with the resonance of higher order Stokes emissions affected by the properties of the Raman resonator 6.

Although the laser pump input may be provided by a variety of conventional lasers, we now describe three experimental demonstrations:

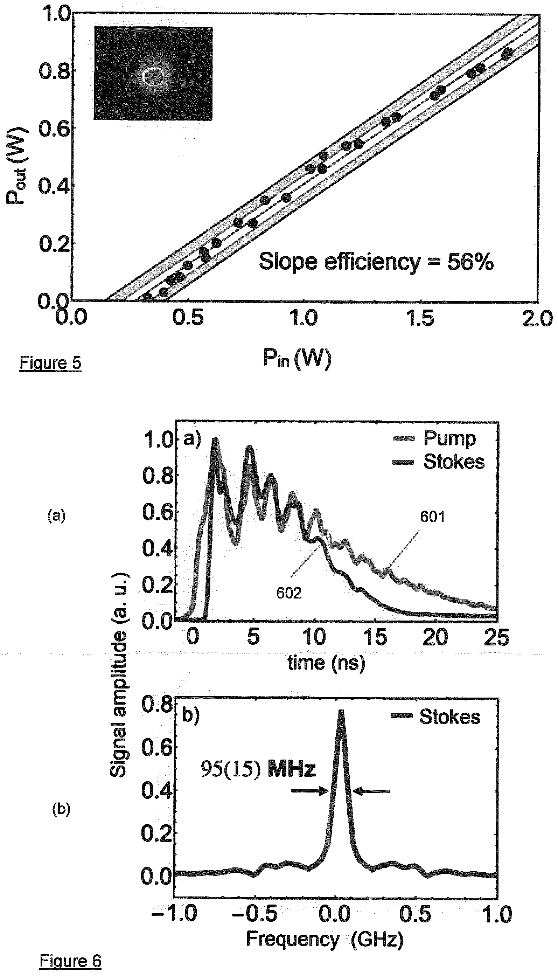

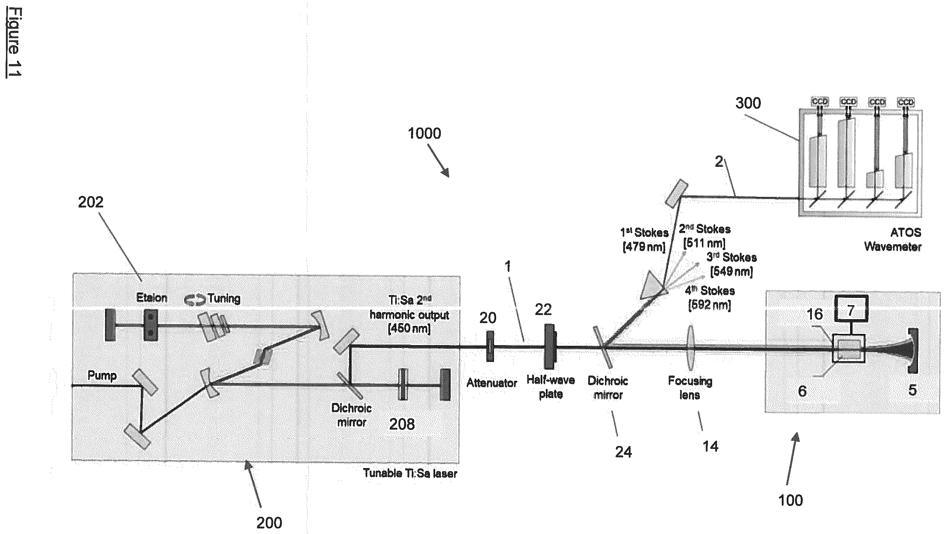

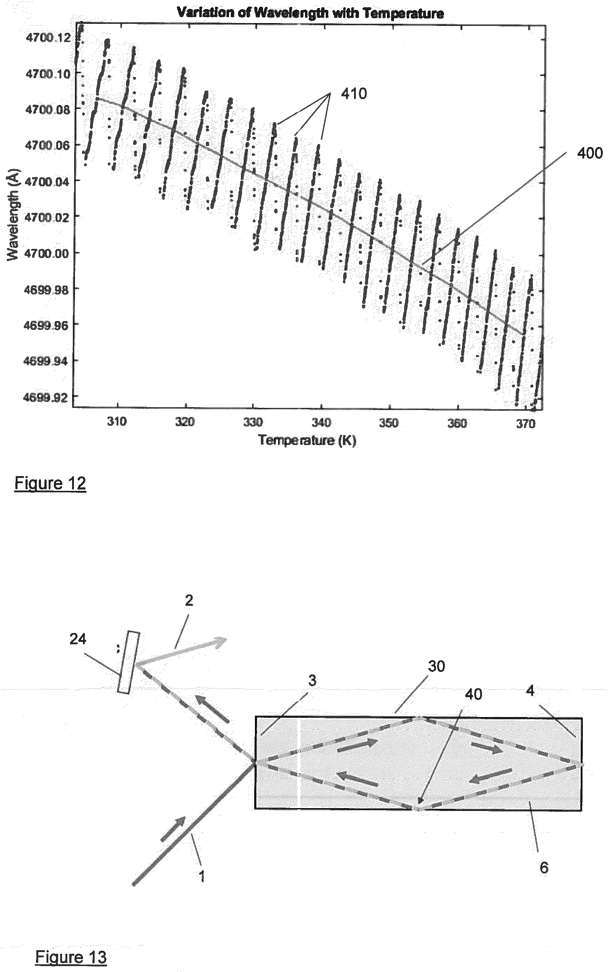

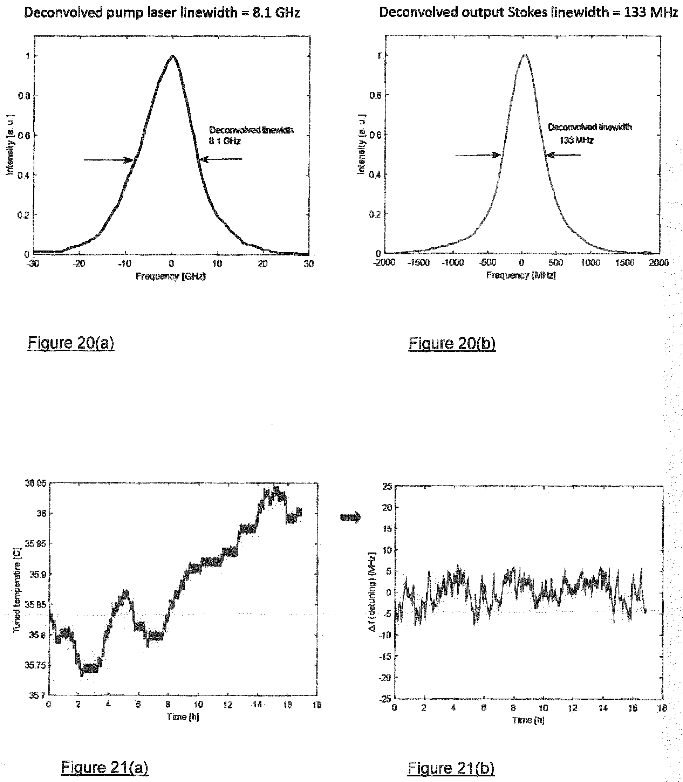

1. Dye laser pumping at 570 nm (Rhodamine 6G). This setup is shown in Figure 4, with the results seen in Figures 5, 6, 7, 8, 9, 10.
2. Second harmonic of a tunable Ti:Sapphire laser operating at 450 nm. This setup is shown in Figure 11, with results seen in Figure 12, 20(a) and 20(b).
3. Single mode pump laser Nd:YAG operating at 532 nm. Corresponding results are shown in Figures 21(a), 21(b), 22, and 23.

## 2. Dye laser pumping (Rhodamine 6G)

Figure 4 illustrates a Raman laser system 1000 comprising a conversion device 100 according to an embodiment of the invention. We used a frequency-doubled DPSS Nd:YVO4 laser (Lumera Blaze) to pump a dye laser 200 (Credo Dye model of Sirah Lasertechnik GmbH). The maximum pump power was 40 W at 532 nm, with a repetition rate of 10 KHz and a pulse duration of $\approx$ 15 ns. The gain media of the dye laser 200 was Rhodamine 6G dissolved in ethanol, which generated laser light at 570 nm. The typical available power for this wavelength was 2 W. The losses of the dye laser light due to the mirrors used for the optical path towards the diamond crystal 6 were $\approx$10%. We pumped a diamond crystal 6 (8 mm length, low-birefringence, low-nitrogen, CVD-grown single crystal, Element Six Ltd.) with the generated dye laser light 1. The pump beam 1 was focussed into the diamond resonator 6 using an f = +150 mm focal lens 14. To control the losses by the mirrors' transmission, due to the polarisation of the pump light, we used a half-wave plate (HWP) 22. Two dichroic mirrors 24a, 24b were used to extract the generated Stokes out of the resonator 6. A 100% reflection pump mirror 5 reflected the pump beam 1 back into the diamond resonator 6. Both the focussing lens 14 and the pump mirror 5 were set up on movable platforms, as schematically illustrated by the double ended arrows. Apart of the diamond resonator 6, no other optical element was used to generate the single longitudinal mode output 2 from the device 100.

We performed different measurements to characterise the system and device of the invention. First, we measured the conversion efficiency of the pump power into Stokes power. We used a power meter (Maestro model of Gentec Electro-Optics, Inc.) for the measurements. Second, to identify the temporal behaviour of the pulses, we measured both the pump laser and the Stokes pulses using a fast photo-diode and a 25 GHz bandwidth oscilloscope. The total measured rising time of the combined photo-diode and oscilloscope was measured to be 250 ps. Third, to determine the spectral characteristics of the pump pulses and the generated Stokes, we used a Scanning Fabry-Pérot interferometer (SFPI, Toptica SFPI 100) and a Cluster LM007 wavelength meter. The free spectral ranges (FSR) of the LM007 and SFPI are 3.75 GHz and 4 GHz, respectively. These values were used to extract the laser bandwidths assuming a linear behaviour of the registered interferometric fringes between the different interference order. A frequency-stabilised helium-neon (HeNe) laser was used to measure the instrumental bandwidth of both devices and served as calibration source for the LM007 wavelength meter. Fourth, we measured wavelength of the Stokes while scanning the pump laser wavelength allowing us to determine the mode-hopping in the device. The results of the described measurements will be presented in the following sections.

### 2.1. Conversion efficiency

To characterise the conversion efficiency of the Raman process, we measured the slope efficiency curve. We varied the pump power by changing the power sent to the amplification stage inside the dye laser. The results shown in Figure 5, where the y-axis represents the average power of generated Stokes output and the x-axis is the pump laser power. The observed instabilities in the output laser power are due to the instabilities in the pump laser power. We fitted a linear trend to the experimental data that resulted in a slope efficiency of 56%. The conversion efficiency at the maximum pump laser power was calculated to be 47%. During the measurements, the stability of the Stokes pulses did not change and its SLM character was conserved for the different powers. During the experiments, we measured the power of the combined first and second Stokes pulses.

Figure 5 illustrates the experimental data (discrete points), together with the line of best fit (dashed line) and 80% and 90% confidence bands. The fitting gave a threshold value of ~270mW for the Stokes process. In the upper left hand corner of Figure 5, the beam spot of the pump laser is shown.

### 2.2. Temporal characterisation

To test the response of the Raman process to the dye pump light 1 inside the diamond resonator 6, we measured the Stokes pulses with a fast photo-diode. An example of the resulting temporal response for both the pump pulse (601) and the generated Stokes pulse (602) is shown in Figure 6(a). Notice the delay in the start of the Raman process. This constitutes an indirect measurement of the threshold power needed to start the generation of Stokes pulses. The Fourier transform of the Stokes pulse is shown in Figure 6(b). From six different measurements of the Stokes temporal response, the calculated bandwidth for the Stokes pulse resulted in 95(15) MHz. This value corresponds to the FWHM of the pulse. Notice that no fitting was used for the extraction of the reported bandwidth value. The error in the bandwidth corresponds to the standard deviation of the measured values. The amplitude modulations with a period of about 2 ns, measured in the pump laser are created in the dye laser cavity ($\approx$ 30 cm long) and are independent of the pump source of the dye laser. The Stokes pulse follows the amplitude modulations of the pump laser. The Raman process is characterised by not requiring inversion of population. This in short implies that the modulations cannot be erased by the lifetime of an excited state.

### 2.3. Spectral measurements

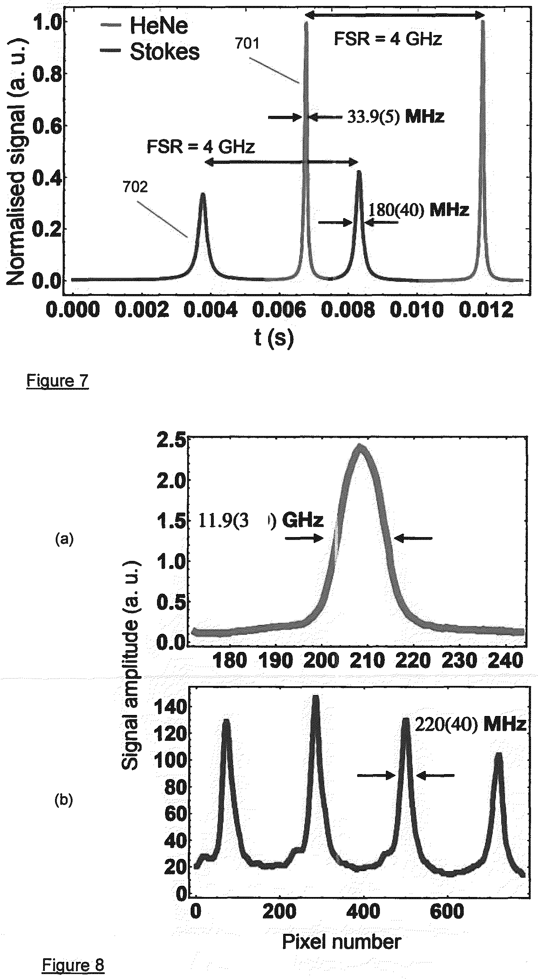

The spectral properties of both the pump and Stokes pulses were analysed by using an SFPI and the LM007 wavelength meter. Examples of the measurements are shown in Figures 7 and 8. For the wavelength meter used to measure the Stokes bandwidth, the instrumental bandwidth was defined using the frequency-stabilized HeNe laser and corresponded to 468 MHz. We calculated the Stokes bandwidth $\Gamma_S$ as the de-convolution of the measured Stokes $\Gamma_{MS}$ and the instrumental bandwidth, i.e., $\Gamma_S = \Gamma_{MS}$ - 468 MHz.

### 2.3.1. Scanning Fabry-Pérot measurements

Figure 7 shows an example of such measured interference pattern in the SFPI. The instrumental bandwidth of SFPI (corresponding to the width of HeNe laser fringes, signal shown at 701) was found to be 33.9(5) MHz. This value corresponds to the weighted mean value from six different measurements of the FWHM. The resulting bandwidth for the Stokes pulses (signal shown at 702) was found to be 180(40) MHz (FWHM).

### 2.3.2. Wavelength meter measurements

The second bandwidth measurement was performed using the LM007 wavelength meter. We measured the bandwidth of both the pump and Stokes pulses. The pump trace is shown in Figure 8(a) and the Stokes trace is illustrated in Figure 8(b). The weighted mean value for bandwidth of the pump pulse resulted in 11.9(3) GHz. For the case of the Stokes pulse, the bandwidth resulted in 220(40) MHz.

The results of the bandwidth measurements are summarised in Table 1. Both wavelength meter and scanning Fabry-Pérot interferometer measurements show similar results within error bars. We calculated the Fourier limit expected bandwidth respect to the Fourier transform of the pulses temporal length.

**Table 1. Stokes pulse bandwidth measurements results**

| Method | Bandwidth (MHz) | Fourier limit |
|---|---|---|
| FT | 95(15) | 1 |
| A-meter | 220(40) | 2.5(1) |
| SFPI | 180(40) | 1.9(1) |

Thus, the device and system of the present invention exhibits an output that is wavelength shifted from the pump laser (570nm to 623nm), in addition to a substantial ~65x decrease in linewidth in comparison to the pump laser (11.9 GHz to ~180 MHz).

### 2.4. Scanning range

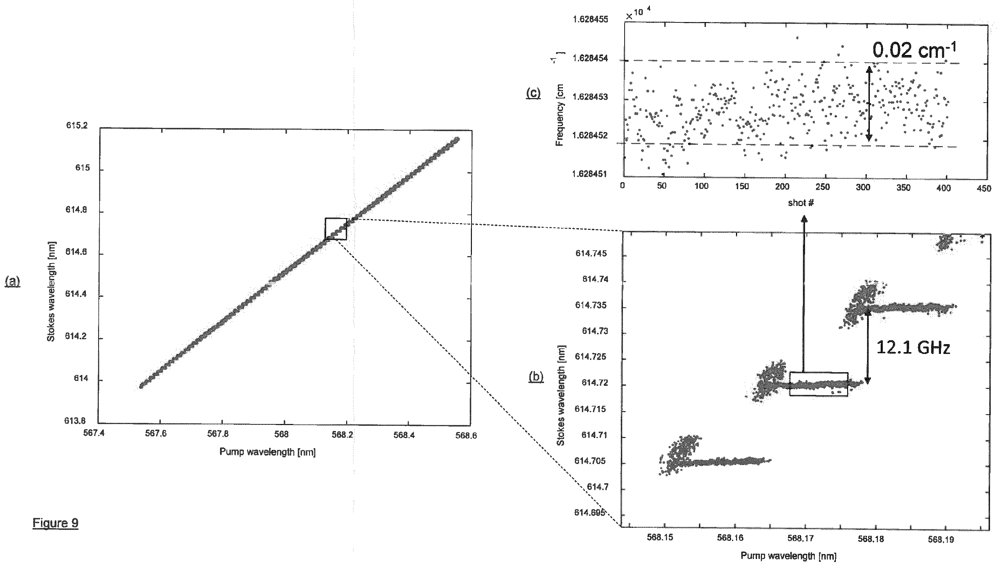

To demonstrate the single longitudinal mode nature of the Stokes light generated by the device 100 and its applicability to spectroscopy, we scanned the pump wavelength and measured the Stokes output, as shown in Figure 9(a). Different scans were performed without any active element stabilising the diamond temperature, all resulting in the same mode-hopping. A zoomed-in portion of the experimental data showing a scanning range of ~0.04 nm is shown in Figure 9(b). The mode-hopping value of the Stokes wavelength, which corresponds to the FSR of the diamond 6, resulted in ~12.1 GHz, larger than the bandwidth of the pump beam.

The stability of the Stokes wavelength was recorded and is shown in Figure 9(c). The set of free running measurements showed a standard deviation $\approx$200 MHz, which corresponds to the Stokes bandwidth.

### 2.5. Power spectral density

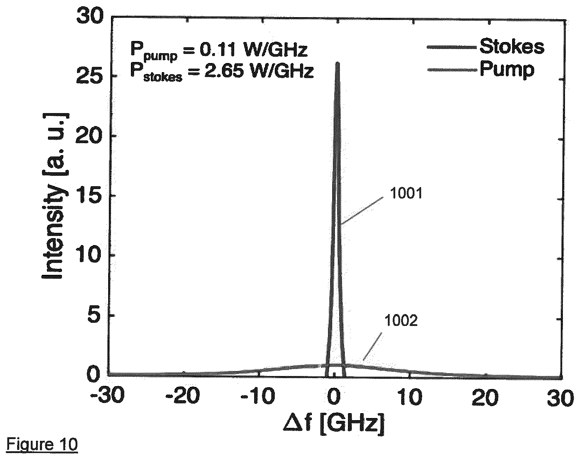

Figure 10 illustrates the power spectral density (PSD) enhancement exhibited by the device and system of the present invention. In order to achieve enhancement of the PSD, the conversion efficiency ($\eta = P_{Stokes}/P_{Pump}$, with $P_{Stokes}$ and $P_{Pump}$ being the average power of the Stokes and pump lasers respectively) must be larger than the spectral compression factor $\xi$, where $\xi$ is the ratio between the Stokes output laser linewidth and the pump linewidth $\Delta\omega_{Stokes}/\Delta\omega_F$). This is to say that $\xi < \eta$, with a PSD enhancement of the order of $\eta/\xi$.

Figure 10 illustrates the Stokes trace (1001) and the pump trace (1002), and shows both a significant increase (~25x) in power spectral density of the Stokes pulses compared to the pump pulses as well as large reduction in linewidth.

### 3. Tuning

Continuous tunability of the Stokes output from the device 100 is achieved by employing an actuator 7 configured to adjust one or more parameters of the Raman medium 6 in order to adjust the wavelength of the Stokes that is able to resonate within the resonator. To achieve continuous tunability we have to consider what effects could impose a change to the centre wavelength of the Raman resonator:

- Temperature may affect the overall length of the resonator via thermal expansion, and can induce a change of group index of the Raman material (dn$_g$/dT).

- Chromatic dispersion of the Raman material results in a slightly different refractive index for each specific wavelength.

In general, such an actuator 7 may be any means by which the resonance of the Raman medium may be adjusted. Preferred examples include a temperature controller, pressure actuator (or acoustic waves), or a constant or modulated voltage. We now consider temperature adjustment in more detail.

Temperature adjustment may be exploited to finely tune the resonator within its free spectral range. It is assumed that coarse tunability (outside the FSR) is previously achieved by changing the fundamental centre wavelength (pump wavelength). In the following we derive the equations for tuning the Stokes centre wavelength as a function of temperature, including the sensitivity to temperature changes (slope).

The following equation must be satisfied for resonance at $\lambda$ (for a linear planar resonator of the Fabry-Pérot type):

$$\lambda = \frac{2n_g(\lambda, T)L(T)}{m}$$

where m is the mode number, n$_g$($\lambda$,T) is the group index at $\lambda$ at temperature T, and L(T) is the length of the Raman resonator at temperature T.

We can further calculate values for L(T) and n$_g$($\lambda$,T). Firstly, a change of temperature is considered for L(T). $T_1$ is the initial temperature and $T_2$ is the evolved temperature after a period.

$$L(T_2) = L(T_1) + \Delta L$$

Where $\Delta$L is the change in length of resonator and $\alpha_L$ is the expansion coefficient, which we can also define:

$$\Delta L = \alpha_L \Delta T L$$

Furthermore, the change of group index due to temperature can be approximated as (assuming that the chromatic dispersion does not change with temperature):

$$n_g(\lambda, T) = n_{g0}(\lambda, T_0) + \frac{dn}{dT} \Delta T$$

The first approach that was considered when deriving an equation for tuning by change of temperature was the scenario in which the sensitivity of group index to temperature change is so small that it is thought to be negligible and the case of the low dispersion meant we could approximate $n_g(\lambda_1, T_1) \approx n_g(\lambda_2, T_2)$. In this situation, the condition for tunability is derived to be:

$$0 = \Delta T - \frac{\lambda}{2\alpha_L L \left[ n_g(\lambda, T_1) + \frac{dn}{dT} \Delta T \right]}$$

For the case of temperature tuning, assuming that $n_{g1}L_1 \approx n_{g2}L_2$ and dn/dT ~ 0, the output frequency tuning of the device 100 can be approximated as

$$\frac{\Delta \nu}{\Delta T} \sim 2\alpha_L \frac{c}{\lambda}$$

where $\Delta$T is the change in temperature, $\alpha_L$ is the expansion coefficient, c is the speed of light and $\lambda_S$ is the Stokes wavelength. This equation implies that Raman media with low expansion coefficient require less accuracy for temperature tuning or stabilization.

In the case where we do not approximate $n_{g1}L_1 \approx n_{g2}L_2$, but we assume that dn/dT ~ 0

$$\Delta T \rightarrow \frac{2Ln_{g1}^3 - 2Ln_{g1}^2 n_{g2} - n_{g2}\lambda_1}{\alpha n_{g2}(2Ln_{g1}^2 + \lambda_1)}$$

And in the case where the change in group index and dn/dT due to temperature are not neglected:

$$\Delta T \to \frac{2\left(\frac{dn}{dT}\right)Ln_{g1}^2 + 2L\alpha n_{g1}^2 n_{g2} + \left(\frac{dn}{dT}\right)\lambda_1 + \alpha n_{g2}\lambda_1}{2\left(-2\left(\frac{dn}{dT}\right)L\alpha n_{g1}^2 - \left(\frac{dn}{dT}\right)\alpha\lambda_1\right)}$$

$$\pm \frac{\sqrt{-4\left(-2\left(\frac{dn}{dT}\right)L\alpha n_{g1}^2 - \left(\frac{dn}{dT}\right)\alpha\lambda_1\right)\left(2Ln_{g1}^3 - 2Ln_{g1}^2 n_{g2} - n_{g2}\lambda_1\right)}}{2\left(-2\left(\frac{dn}{dT}\right)L\alpha n_{g1}^2 - \left(\frac{dn}{dT}\right)\alpha\lambda_1\right)}$$

$$\frac{\sqrt{+\left(-2\left(\frac{dn}{dT}\right)Ln_{g1}^2 - 2L\alpha n_{g1}^2 n_{g2} - \left(\frac{dn}{dT}\right)\lambda_1 - \alpha n_{g2}\lambda_1\right)^2}}{2\left(-2\left(\frac{dn}{dT}\right)L\alpha n_{g1}^2 - \left(\frac{dn}{dT}\right)\alpha\lambda_1\right)}$$

From this equation it is clear that any effect that affects the length of the resonator and/or the group index of the Raman medium, as well as any effect that can adjust the refractive index of the Raman medium, can be used for tuning the output of the device. These parameters may be adjusted using one or more of:

- Birefringence: induced by stress, pressure, voltage.

- Piezoelectric effect

- Thermal expansion

- Thermo-optic coefficient (change of refractive index in response to temperature)

- Magnetorefractive effect.

Additionally, we must consider the temperature dependence of the Raman line shift away from the unperturbed Raman frequency (Liu, Bursill, & Prawer, 2000):

$$\Delta\omega = -A\left(\frac{2}{e^{\frac{\hbar\omega_0}{2k_B T}} - 1}\right)$$

Where A is a constant which depends on the details of the Raman dispersion curves, $\omega_0$ is the zone-centre phonon energy at T = 0 K, $k_B$ is the Boltzmann factor and T is the absolute temperature. It was noted that the rate of change of the Raman shift with temperature is comparable to the tuning produced by thermal expansion and dispersion. Therefore, adjusting the temperature of the Raman resonator affects the output SLM frequency of the device through a change in the Raman line shift as well as thermal expansion.

### 3.1. Pumping with Ti:Sapphire laser

Figure 11 illustrates a system 1000 for generating a single longitudinal mode output according to the invention which may be tuned by temperature control. In this example the conversion device (generally shown at 100) is pumped by a Titanium:Sapphire (Ti:Sa) laser 200. A focussing lens 14 is provided on the optical axis between the pump laser 200 and the Raman medium 6, and a pump mirror 5 is positioned on a distal side of the Raman medium 6 to the pump laser 200. In addition, the Raman medium defining the resonator is situated within a thermal stabilisation unit 16, which here is an oven, such as an oven available from Covesion Ltd. The temperature within the oven 16 may be adjusted by temperature controller 7 in order to tune the wavelength of the laser output 2 from the device 100.

The Raman resonator 6 was pumped from an existing intra-cavity frequency-doubled tuneable Ti:Sa laser 200 with a Z-cavity layout. The Ti:Sa second harmonic output was tuned to 450 nm using a birefringent filter and a 0.3 mm thick Fabry-Pérot etalon 202 . Frequency conversion was achieved with a 6 mm long BiBO crystal 208. The range of tuneable wavelengths covered was 350 - 450 nm and the Ti:Sa system produced an average power of ~1.2W at 450nm with a pulse duration of 50ns. The laser beam was passed through an attenuator 20 for the polarization state to be controlled with a broadband zero order half-wave plate (HWO) 22.

The Raman active medium was placed in between the dichroic mirror 24 and concave (ROC = 50 mm) pump return mirror 5. The active Raman medium 6 used was a synthetic single crystal diamond (low birefringence, low-nitrogen, CVD-grown single crystal, from Element Six Ltd.) with dimensions of 5 mm (length) x 5 mm (width) x 1 mm (height). Thus, the diamond 6 defined a planar, linear resonator. The Stokes was fed back within the resonator by the uncoated surfaces of the crystal diamond. The nitrogen content of the diamond was approximately 20-40 ppb. The birefringence was typically in the range $10^{-5}$ to $10^{-6}$ in the beam propagation direction. The wedge angle of the end facets was approximately 1 mrad. The end surface facets of the diamond 6 were polished to a roughness $R_q$ < 5 nm. The diamond was placed into the thermal stabilizing unit 16, and the output beam from the Ti:Sa laser was focused through it.

For the configuration shown in Figure 11, the Ti:Sa system was capable of producing an average power 1.2 W at 450nm. The waist produced on the diamond 6 from the output through the f = 100mm lens 14 was measured to be d = 57microns. The linewidths (FWHM) of the 450nm pump light 1 and the resulting SLM beam 2 were measured using a laser wavelength meter and radiation spectrum analyser LM-007 (lambdameter) 300. Maximum Stokes output power was achieved by systematically adjusting the distances between the diamond 6 and the pump mirror 5; this resulted in a well-matched cavity waist in the centre of the resonator 6 of $60\mu m$. The optimal distance between the diamond and the curved pump mirror 5 was found to be ~48mm. The total round-trip time of the cavity was estimated to be 0.5ns, which is about a factor of 100 less than the pump pulse duration of 50ns. As a result of this, efficient Raman conversion was enabled and the maximum conversion efficiency was measured to be 28%. The lasing threshold was $40\mu J$ and the maximum output power achieved was 183mW, which was limited only by the pump laser power.

The resulting SLM beam 2 generated by the device resonator was collinear and counter-propagating with respect to the pump beam 1, and so a flat short-pass dichroic mirror 24 was used for separating the Stokes outputs from the pumping laser light 1. The cut-off wavelength of the dichroic mirror was 420 nm and in order to enable broadband operation, the angle of the dichroic mirror was adjusted for each pump wavelength used. The Stokes output orders were then separated one from another using a prism.

To maximise the cascaded Stokes output power the diamond crystal tip-tilt angles and distance with respect to the spherical mirror 5 were adjusted. This obtained a well-matched cavity waist of ~$60\mu m$ in diameter.

Figures 20(a) and 20(b) show the measured linewidths for the pump beam 1 and the SLM beam 2, respectively. The deconvolved linewidth of the pump beam was found to be 8.1GHz, with the output Stokes linewidth 2 measured to be 133MHz, (deconvolved by subtracting the instrumental bandwidth). Thus, the linewidth of the resulting SLM beam was found to be ~60x narrower than the pump beam.

### 3.1.1. Measurement of wavelength as a function of temperature

A scan was performed increasing the temperature of the thermal stabilising unit 16 between 303 K and 373 K in steps of 0.20 K. At each increment, the oven was left to dwell at the set temperature for 10 seconds and the output wavelength readout was recorded, along with the UTC time-stamp, at a frequency of 1 Hz. The lambdameter 300 was set to start recording the wavelength before the temperature scan was initiated and then continued to record data in parallel with the data taken from the temperature controller. Figure 12 shows the plot of the recorded wavelength against the recorded temperature with a moving average across the scan.

As seen in Figure 12, the output wavelength of the device 100 was shown to decrease with increasing temperature and cover ~21 free spectral ranges of the device resonator (indicated generally at 410) of ~11.75 GHz between 303 K and 373 K. Line 400 shows tuning due to the Raman shift changing with the temperature. Mode-hopping was observed after each FSR was covered: this is demonstrated by the jumps between each FSR. Additionally, the slope of each FSR was noted to become sharper with increasing temperature.

Thus, the wavelength of the single longitudinal mode laser output generated by the device of the present invention may be tuned by adjusting the temperature of the (monolithic) Raman resonator. The present invention therefore provides a straightforward and readily tunable means of converting a conventional broadband laser to a SLM output with a tunable wavelength.

### 3.2. Narrow band pumping (ND:YAG)

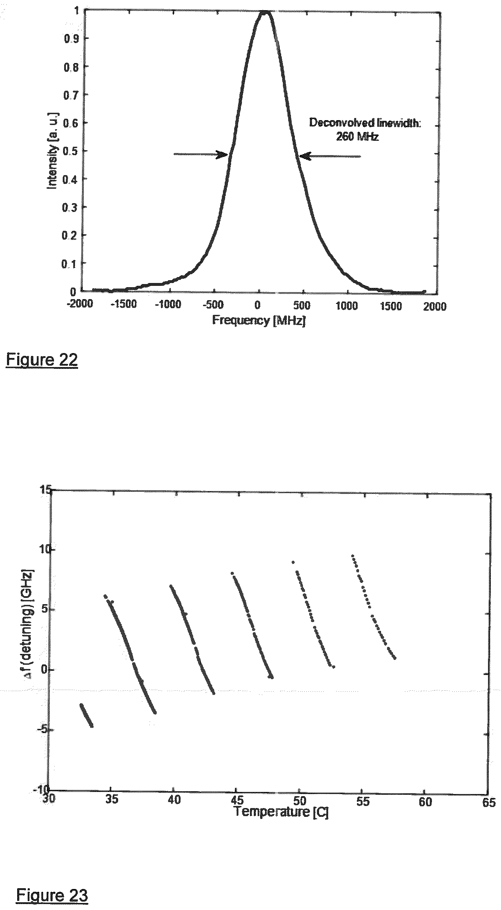

A test was also performed using a narrow band, single longitudinal mode pump laser (Nd:YAG operating at 532 nm) that was used to pump a 5mm long diamond resonator with a free spectral range ~12.1GHz. The pump wavelength was 532nm and the pump linewidth was ~160MHz. The output SLM beam from the diamond resonator had a wavelength of 572nm and a linewidth of ~260MHz (see Figure 22). Thus, no enhancement of the power spectral density was observed, although this setup illustrates that the present invention is capable of producing a SLM output when pumped by a narrowband SLM pump input.

Figure 23 illustrates the tuning of the SLM output with temperature when pumped with a narrowband SLM pump laser. Similarly to Figure 12, mode-hopping was observed after each FSR was covered.

### 3.2.1. Wavelength stabilisation

A closed feedback loop was used to control the temperature of the oven 16 in order to provide wavelength stabilisation of the SLM output from the device 100. This is illustrated in Figures 21(a) and 21(b). More specifically, Figure 21(a) illustrates the automatic temperature adjustment over time in response to the measured output wavelength and the closed feedback loop. Figure 21(b) is a plot of the Stokes output wavelength variation over the same time period, demonstrating an accuracy better than 10MHz (limited by the resolution of the wavemeter).

### 4. Further resonator geometries

In the embodiments discussed so far, the Raman medium has had a linear geometry, thereby defining a linear resonator of the Fabry-Pérot type. The principle of operation is analogous for linear resonators with non-flat surfaces, such as curved surfaces at one or both ends of the Raman medium. Such a device would advantageously have a higher degree of transverse mode stability, maintaining single longitudinal mode operation. However, other resonator geometries are envisaged, as will now be discussed with reference to Figures 13 to 16.

Figure 13 is a schematic illustration of an integrated ring resonator defined by a Raman medium 6 having substantially rectangular geometry. The Raman medium defines a first pair of substantially parallel and opposing feedback surfaces 3, 4, and a second pair of substantially parallel and opposing feedback surfaces 30, 40. In use, a laser pump input is incident on first surface 3 at an angle away from normal incidence. The pump and resultant Stokes then follow an optical path through the resonator, reflecting off surfaces 30, 40 due to total internal reflection, and reflecting off end surface 4 which is either uncoated, or has a high reflectance coating for both the Stokes and the pump. The Stokes and pump beams exit the resonator through first surface 3, and are separated using dichroic mirror 24. The increased optical path length in such a ring resonator configuration advantageously increases the gain length of the device.

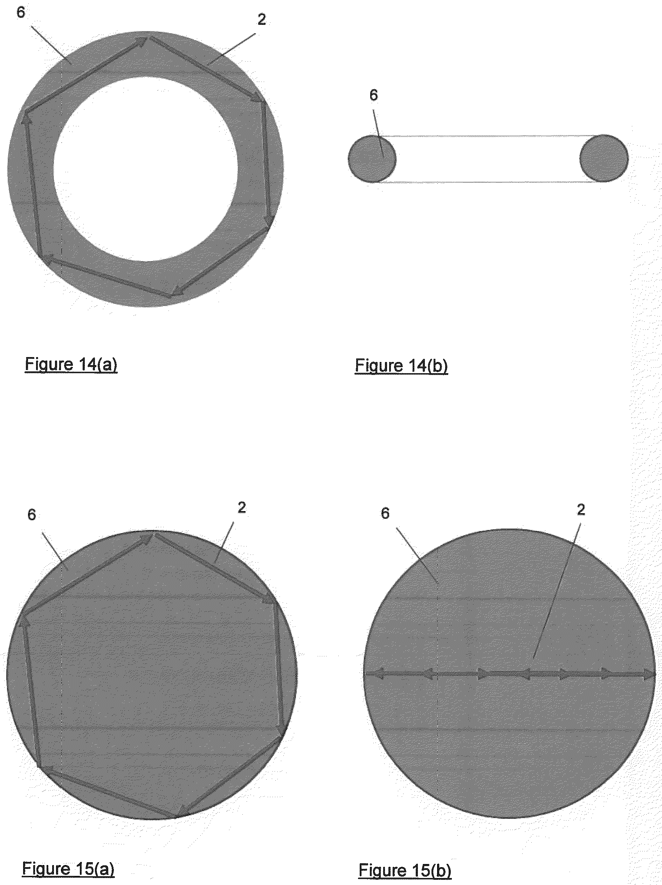

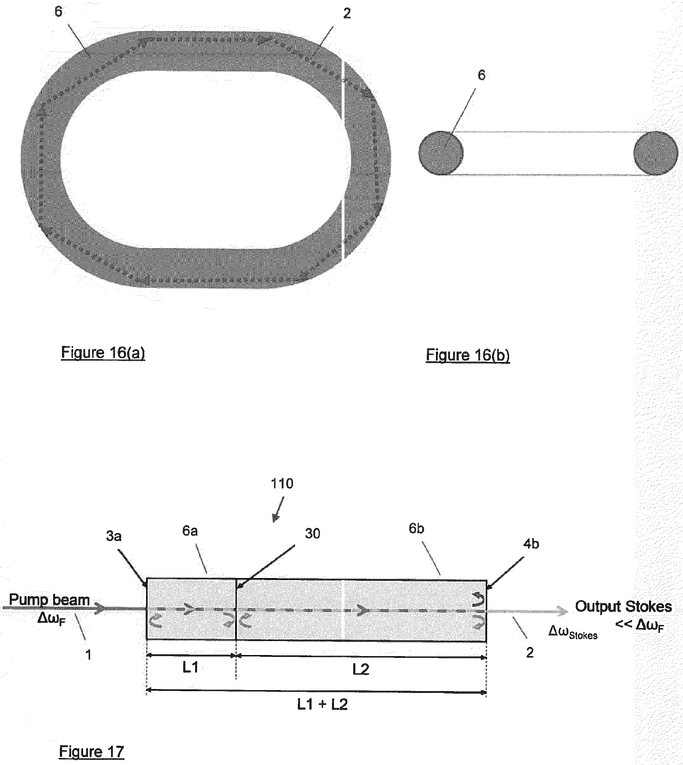

Figures 14a and 14b illustrate a toroidal resonator in plan view (Figure 14(a)) and cross-sectional view (Figure 14(b)). The Raman medium 6 is formed in the shape of a toroid, and the path taken by the Stokes within the resonator is illustrated at 2. In a similar manner, Figures 15(a) and 15(b) show plan and cross-sectional views, respectively, of a spherical resonator configuration, and Figures 16(a) and 16(b) illustrate plan and cross-sectional views, respectively, of a "racetrack" resonator configuration. In all of these examples, the Raman medium defines feedback surfaces (interfaces) of the resonator such that the Stokes emissions resonate completely within the Raman medium.

### 5. Multiple resonators

In the examples so far, we have described a device 100 comprising a single Raman resonator used to generate a single longitudinal mode output. We now discuss devices 110 that comprise two or more Raman resonators sequentially coupled (e.g. bonded or connected) together, with reference to Figures 17 to 19.

Figure 17 illustrates an example device 110 comprising first 6a and second 6b resonators sequentially coupled at coupling feedback interface 30. The resonators 6a and 6b may be coupled via their respective uncoated end faces, although in embodiments feedback elements such as planar mirrors may be used at the coupling feedback interface 30 in order to enhance reflection of the Stokes. Each resonator has a linear resonator configuration. The first resonator 6a has an effective length L1, and the second resonator 6b has an effective length L2. A third resonator having length (L1 + L2) is defined by the first end surface 3a of the first resonator 6a, and the second end surface 4b of the second resonator 6b.

The device 110 is designed to work at the "unison", meaning that the effective lengths L1, L2 of each Raman medium are configured so that there is a single longitudinal mode resonating in all resonators simultaneously. The pump beam 1 propagates along all Raman media and can be fed back to the resonators by ensuring that feedback surface 4b has a high reflectance at the pump beam wavelength (for higher conversion efficiency). Tuning using any of the methods discussed herein may be applied to each resonator individually, or to the coupled device 110 as a whole.

In Figure 17, the FSR of the first resonator 6a is greater than the pump linewidth $\Delta\omega_F$, and the FSR of the second resonator 6b is less than the pump linewidth. In this way, when operating in the high gain regime, the first resonator 6a produces a SLM seed which is injected into the second resonator 6b for amplification.

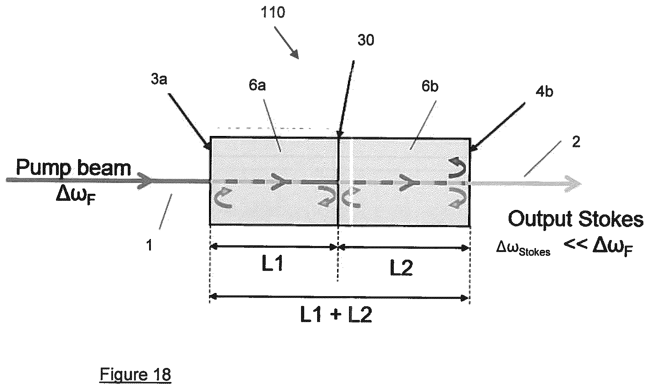

Figure 18 illustrates an example device 110 in which both resonators have a FSR greater that the pump linewidth and both operate above lasing threshold, with mutual seeding between the resonators.

In both the devices of Figure 17 and Figure 18, the effective length of each resonator is substantially equal to an integer number of half wavelengths of the resonator mode, such that: $L1 = m_1 \frac{\lambda_S}{2}$ , $L2 = m_2 \frac{\lambda_S}{2}$ , and therefore

$\frac{L1}{L2} = \frac{m_1}{m_2}$ , where $\lambda_S$ is the Stokes wavelength and m1 and m2 are integers.

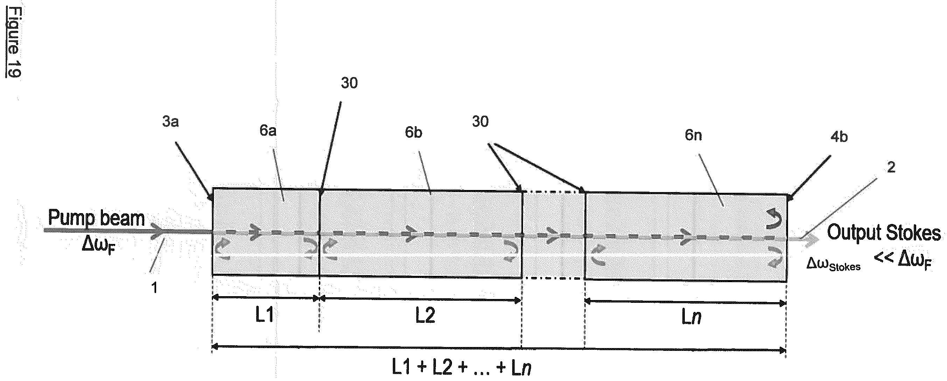

Such a multiple-resonator device 110 may in general comprise n such resonators, where n > 1. Figure 19 schematically shows such an example of an n-resonator device 110, in which the first resonator 6a has a FSR less than the pump linewidth, and seeds a plurality of amplifier resonators 6b...6n coupled in series, with each of the amplifier resonators having a FSR smaller than the pump linewidth.

For an n-resonator device:

$$\frac{Li}{Lj} = \frac{m_i}{m_j}, \forall \{i, j\} \in A = [1, N] \in \mathbb{N}_1$$

Depending on the reflectivity of end surfaces 3a and 4b and the coupling feedback interface(s) 30 between the resonators, and the gain in each Raman medium, there are at least three different regimes of operation for a multiple-resonator device 110:

(1) Oscillator-amplifier: A single longitudinal mode seed is generated in the first resonator 6a, and inject it into the second (and further) resonator 6b for effective amplification. This configuration is known as lock-in amplification. In such a regime, the second (and further) resonator is configured so it cannot lase by itself (the losses > gain), but can effectively amplify the light produced by the first resonator.

(2) Double/multiple resonators: In this case both (or more) resonators operate above lasing threshold, and the single mode resonates due to effective and mutual seeding of the resonators to each other. A condition for single mode operation is that the overall gain of the selected single longitudinal mode is higher than for the adjacent modes that only resonate in one of the resonators. The selected longitudinal mode should be capable of depleting the gain enough in all the Raman media to ensure that it is the only mode resonating.

(3) Near threshold operation: the resonators do not lase by themselves, since they don't have enough gain to overcome their losses (cannot lase independently). However, when coupled to each other, the mutual feedback is equivalent to reducing the losses at a single longitudinal mode. This reduction of losses for a specific longitudinal mode allows the device to produce single longitudinal mode output.

## Claims

1. A Raman laser conversion device for generating a single longitudinal mode, SLM, laser output, comprising:

   a laser pump providing a laser pump input to a Raman medium;
   wherein the Raman medium exhibits a Stokes emission when subject to pumping by the laser pump input, the laser pump input having a pump linewidth and the Raman medium having a Raman linewidth; wherein
   the Raman medium is configured to define feedback interfaces of a resonator such that the Stokes emission resonates within the Raman medium; and further wherein
   the free spectral range, FSR, of the resonator with respect to the pump linewidth and the Raman linewidth is configured such that only one longitudinal mode of the Stokes emission resonates within the Raman medium upon pumping by the laser pump input, wherein the FSR of the resonator is greater than the pump linewidth and the pump linewidth is greater than or approximately equal to the Raman linewidth such that a Stokes spectrum strongly resembles a pump spectrum due to operating in a coherent Raman scattering regime; whereby
   the laser conversion device generates a SLM laser output that is frequency shifted with respect to the laser pump input.

2. The device of claim 1, wherein the Raman medium is a diamond crystal.

3. The device of any of claim 1 or claim 2, further comprising an actuator configured to adjust at least one parameter of the resonator so as to adjust the frequency of the SLM laser output.

4. The device of claim 3, wherein the actuator comprises means for adjusting the temperature of the Raman medium.

5. The device of claim 3 or claim 4, wherein the actuator comprises one or more of:

   (i) a pressure actuator;
   (ii) an acoustic wave generator;
   (iii) a magnetic field input;
   (iv) a voltage input; and
   (v) a position controller configured to adjust the position of the Raman medium with respect to the laser pump input.

6. The device of any of the preceding claims, wherein at least one feedback interface comprises a feedback element that is configured to increase the feedback of the Stokes emission at that interface.

7. The device of any of the preceding claims, further comprising a pump feedback element that is configured to feed back the pump laser input into the Raman medium.

8. The device of any of the preceding claims, wherein the geometry of the Raman medium is configured to define an optical path length of the resonator for a particular resonator mode.

9. The device of any of the preceding claims, further comprising a second Raman medium coupled to the first Raman medium via a coupling feedback interface, wherein the second Raman medium is configured to define feedback interfaces of a second resonator.

10. A Raman laser system for generating a single longitudinal mode, SLM, laser output, comprising: a Raman laser conversion device according to any of the preceding claims; wherein the pump laser is configured to provide a laser pump input, the laser pump input having a pump linewidth.

11. The laser system according to claim 10, further comprising a focussing element configured to focus the laser pump input into the Raman medium with an intensity great enough such that the device operates in the coherent Raman scattering regime.

12. The laser system according to claim 11, wherein the focussing element is configured to focus the laser pump input into the Raman medium with an intensity great enough such that $g_0 I_F L > 8$ wherein $g_0$ is the Raman gain of the Raman medium, $I_F$ is the laser pump input intensity and L is the gain length.

13. A method of generating a single longitudinal mode, SLM, laser output comprising a Raman laser conversion device as defined in claim 1, the method comprising: receiving the laser pump input of the Raman laser conversion device so as to generate a SLM laser output that is frequency shifted with respect to the laser pump input, wherein the laser pump input has a pump linewidth and the Raman laser conversion device comprises:

   the Raman medium configured to exhibit a Stokes emission when subject to pumping by the laser pump input, the Raman medium having a Raman linewidth; wherein
   the Raman medium is configured to define feedback interfaces of a resonator such that the Stokes emission resonates within the Raman medium; and further wherein
   the free spectral range, FSR, of the resonator with respect to the pump linewidth and the Raman linewidth is configured such that only one longitudinal mode of the Stokes emission resonates within the Raman medium upon pumping by the laser pump input, wherein the FSR of the resonator is greater than the pump linewidth and the pump linewidth is greater than or
   approximately equal to the Raman linewidth such that a Stokes spectrum strongly resembles a pump spectrum due to operating in a coherent Raman scattering regime;
   whereby
   the laser conversion device generates a SLM laser output that is frequency shifted with respect to the laser pump input.

**Patentansprüche**

1. Raman-Laserumwandlungsvorrichtung zum Erzeugen einer Einzellongitudinalmodenlaserausgabe, SLM-Laserausgabe, die Folgendes umfasst:

eine Laserpumpe, die eine Laserpumpeneingabe in ein Raman-Medium bereitstellt;

wobei das Raman-Medium eine Stokes-Emission aufweist, wenn es einem Pumpen durch die Laserpumpeneingabe ausgesetzt ist, die Laserpumpeneingabe eine Pumpenlinienbreite aufweist und das Raman-Medium eine Raman-Linienbreite aufweist;

das Raman-Medium konfiguriert ist, Rückkopplungsgrenzflächen eines Resonators derart zu definieren, dass die Stokes-Emission im Raman-Medium in Resonanz gerät; und ferner

der freie Spektralbereich, FSR, des Resonators in Bezug auf die Pumpenlinienbreite und die Raman-Linienbreite derart konfiguriert ist, dass lediglich eine Longitudinalmode der Stokes-Emission im Raman-Medium aufgrund eines Pumpens durch die Laserpumpeneingabe in Resonanz gerät,

wobei der FSR des Resonators größer als die Pumpenlinienbreite ist und die Pumpenlinienbreite größer oder etwa gleich der Raman-Linienbreite ist, derart, dass ein Stokes-Spektrum aufgrund des Betreibens in einem kohärenten Raman-Streuungsregime einem Pumpenspektrum stark gleicht; wodurch

die Laserumwandlungsvorrichtung eine SLM-Laserausgabe erzeugt, die in Bezug auf die Laserpumpeneingabe frequenzversetzt ist.

2.  Vorrichtung nach Anspruch 1, wobei das Raman-Medium ein Diamantkristall ist.

3.  Vorrichtung nach einem der Ansprüche 1 oder 2, die ferner einen Aktor umfasst, der konfiguriert ist, mindestens einen Parameter des Resonators einzustellen, um die Frequenz der SLM-Laserausgabe einzustellen.

4.  Vorrichtung nach Anspruch 3, wobei der Aktor Mittel zum Einstellen der Temperatur des Raman-Mediums umfasst.

5.  Vorrichtung nach Anspruch 3 oder Anspruch 4, wobei der Aktor eines oder mehrere der Folgenden umfasst:

(i) einen Druckaktor;
(ii) einen Schallwellengenerator;
(iii) einen Magnetfeldeingang;
(iv) einen Spannungseingang und
(v) eine Positionssteuereinheit, die konfiguriert ist, die Position des Raman-Mediums in Bezug auf die Laserpumpeneingabe einzustellen.

6.  Vorrichtung nach einem der vorhergehenden Ansprüche, wobei mindestens eine Rückkopplungsgrenzfläche ein Rückkopplungselement umfasst, das konfiguriert ist, die Rückkopplung der Stokes-Emission an dieser Schnittstelle zu erhöhen.

7.  Vorrichtung nach einem der vorhergehenden Ansprüche, die ferner ein Pumpenrückkopplungselement umfasst, das konfiguriert ist, die Pumplasereingabe in das Raman-Medium rückzukoppeln.

8.  Vorrichtung nach einem der vorhergehenden Ansprüche, wobei die Geometrie des Raman-Mediums konfiguriert ist, eine optische Pfadlänge des Resonators für einen bestimmten Resonatormodus zu definieren.

9.  Vorrichtung nach einem der vorhergehenden Ansprüche, die ferner ein zweites Raman-Medium umfasst, das an das erste Raman-Medium mittels einer Kopplungsrückkopplungsgrenzfläche gekoppelt ist, wobei das zweite Raman-Medium konfiguriert ist, Rückkopplungsgrenzflächen eines zweiten Resonators zu definieren.

10. Raman-Lasersystem zum Erzeugen einer Einzellongitudinalmodenlaserausgabe, SLM-Laserausgabe, das Folgendes umfasst:

eine Raman-Laserumwandlungsvorrichtung nach einem der vorhergehenden Ansprüche; wobei der Pumplaser konfiguriert ist, eine Laserpumpeneingabe bereitzustellen, wobei die Laserpumpeneingabe eine Pumpenlinienbreite aufweist.

11. Lasersystem nach Anspruch 10, das ferner ein fokussierendes Element umfasst, das konfiguriert ist, die Laserpumpeneingabe in das Raman-Medium mit einer Intensität zu fokussieren, die groß genug ist, damit die Vorrichtung im kohärenten Raman-Streuungsregime arbeitet.

12. Lasersystem nach Anspruch 11, wobei das fokussierende Element konfiguriert ist, die Laserpumpeneingabe im Raman-Medium mit einer Intensität zu fokussieren, die groß genug ist, damit $g_0 I_F L > 8$, wobei $g_0$ die Raman-Verstärkung des Raman-Mediums ist, $I_F$ die Laserpumpeneingabeintensität ist und L die Verstärkungslänge ist.

13. Verfahren zum Erzeugen einer Einzellongitudinalmodenlaserausgabe, SLM-Laserausgabe, das eine Raman-Laserumwandlungsvorrichtung nach Anspruch 1 umfasst, wobei das Verfahren Folgendes umfasst:
Empfangen der Laserpumpeneingabe der Raman-Laserumwandlungsvorrichtung, um eine SLM-Laserausgabe zu erzeugen, die in Bezug auf die Laserpumpeneingabe frequenzversetzt ist, wobei die Laserpumpeneingabe eine Pumpenlinienbreite aufweist und die Raman-Laserumwandlungsvorrichtung Folgendes umfasst:

das Raman-Medium, das konfiguriert ist, eine Stokes-Emission aufzuweisen, wenn es einem Pumpen durch die Laserpumpeneingabe ausgesetzt ist, wobei das Raman-Medium eine Raman-Linienbreite aufweist; wobei das Raman-Medium konfiguriert ist, Rückkopplungsgrenzflächen eines Resonators derart zu definieren, dass die Stokes-Emission im Raman-Medium in Resonanz gerät; und ferner
der freie Spektralbereich, FSR, des Resonators in Bezug auf die Pumpenlinienbreite und die Raman-Linienbreite derart konfiguriert ist, dass lediglich eine Longitudinalmode der Stokes-Emission im Raman-Medium aufgrund eines Pumpens durch die Laserpumpeneingabe schwingt, wobei der FSR des Resonators größer als die Pumpenlinienbreite ist und die Pumpenlinienbreite größer oder etwa gleich der Raman-Linienbreite ist, derart, dass ein Stokes-Spektrum aufgrund des Betreibens in einem kohärenten Raman-Streuungsregime einem Pumpenspektrum stark gleicht; wodurch
die Laserumwandlungsvorrichtung eine SLM-Laserausgabe erzeugt, die in Bezug auf die Laserpumpeneingabe frequenzversetzt ist.

## Revendications

1. Dispositif de conversion laser Raman pour générer une sortie laser à mode longitudinal unique, dit SLM, comprenant :

une pompe laser fournissant une entrée de pompe laser à un milieu Raman ;
le milieu Raman présentant une émission Stokes lorsqu'il est soumis à un pompage par l'entrée de pompe laser, l'entrée de pompe laser possédant une largeur de raie de pompe et le milieu Raman possédant une largeur de raie Raman ; dans lequel
le milieu Raman est configuré pour définir des interfaces de rétroaction d'un résonateur de sorte que l'émission Stokes résonne dans le milieu Raman ; et en outre dans lequel
l'intervalle spectral libre, dit FSR, du résonateur par rapport à la largeur de raie de pompe et à la largeur de raie Raman est configuré de sorte qu'un seul mode longitudinal de l'émission Stokes résonne dans le milieu Raman lors du pompage par l'entrée de pompe laser,
le FSR du résonateur étant supérieur à la largeur de raie de pompe et la largeur de raie de pompe étant supérieure ou approximativement égale à la largeur de raie Raman de sorte qu'un spectre Stokes ressemble fortement à un spectre de pompe du fait du fonctionnement dans un régime de diffusion Raman cohérente ; moyennant quoi le dispositif de conversion laser génère une sortie laser SLM décalée en fréquence par rapport à l'entrée de pompe laser.

2. Dispositif selon la revendication 1, dans lequel le milieu Raman est un cristal de diamant.

3. Dispositif selon l'une quelconque des revendications 1 ou 2, comprenant en outre un actionneur configuré pour ajuster au moins un paramètre du résonateur de manière à ajuster la fréquence de la sortie laser SLM.

4. Dispositif selon la revendication 3, dans lequel l'actionneur comprend des moyens d'ajustement de la température du milieu Raman.

5. Dispositif selon la revendication 3 ou la revendication 4, dans lequel l'actionneur comprend un ou plusieurs des éléments suivants :

(i) un actionneur de pression ;
(ii) un générateur d'ondes acoustiques ;
(iii) une entrée de champ magnétique ;
(iv) une entrée de tension ; et
(v) un contrôleur de position configuré pour ajuster la position du milieu Raman par rapport à l'entrée de pompe laser.

**6.** Dispositif selon l'une quelconque des revendications précédentes, dans lequel au moins une interface de rétroaction comprend un élément de rétroaction qui est configuré pour augmenter la rétroaction de l'émission Stokes au niveau de cette interface.

**7.** Dispositif selon l'une quelconque des revendications précédentes, comprenant en outre un élément de rétroaction de pompe qui est configuré pour réinjecter l'entrée laser de pompe dans le milieu Raman.

**8.** Dispositif selon l'une quelconque des revendications précédentes, dans lequel la géométrie du milieu Raman est configurée pour définir une longueur de trajet optique du résonateur pour un mode particulier du résonateur.

**9.** Dispositif selon l'une quelconque des revendications précédentes, comprenant en outre un deuxième milieu Raman couplé au premier milieu Raman via une interface de rétroaction de couplage, le deuxième milieu Raman étant configuré pour définir des interfaces de rétroaction d'un deuxième résonateur.

**10.** Système laser Raman pour générer une sortie laser à mode longitudinal unique, dit SLM, comprenant :
un dispositif de conversion laser Raman selon l'une quelconque des revendications précédentes ; le laser de pompe étant configuré pour fournir une entrée de pompe laser, l'entrée de pompe laser possédant une largeur de raie de pompe.

**11.** Système laser selon la revendication 10, comprenant en outre un élément de focalisation configuré pour focaliser l'entrée de pompe laser dans le milieu Raman avec une intensité suffisamment grande pour que le dispositif fonctionne dans le régime de diffusion Raman cohérente.

**12.** Système laser selon la revendication 11, dans lequel l'élément de focalisation est configuré pour focaliser l'entrée de pompe laser dans le milieu Raman avec une intensité suffisamment grande pour que $g_0 I_F L > 8$, $g_0$ étant le gain Raman du milieu Raman, $I_F$ étant l'intensité de l'entrée de pompe laser et L étant la longueur de gain.

**13.** Procédé de génération d'une sortie laser à mode longitudinal unique, dit SLM, comprenant un dispositif de conversion laser Raman tel que défini à la revendication 1, le procédé comprenant :
la réception de l'entrée de pompe laser du dispositif de conversion laser Raman de manière à générer une sortie laser SLM décalée en fréquence par rapport à l'entrée de pompe laser, l'entrée de pompe laser possédant une largeur de raie de pompe, et le dispositif de conversion laser Raman comprenant :

le milieu Raman configuré pour présenter une émission Stokes lorsqu'il est soumis à un pompage par l'entrée de pompe laser, le milieu Raman possédant une largeur de raie Raman ; dans lequel
le milieu Raman est configuré pour définir des interfaces de rétroaction d'un résonateur de sorte que l'émission Stokes résonne dans le milieu Raman ; et en outre dans lequel
l'intervalle spectral libre, dit FSR, du résonateur par rapport à la largeur de raie de pompe et à la largeur de raie Raman est configuré de sorte qu'un seul mode longitudinal de l'émission Stokes résonne dans le milieu Raman lors du pompage par l'entrée de pompe laser, le FSR du résonateur étant supérieur à la largeur de raie de pompe et la largeur de raie de pompe étant supérieure ou approximativement égale à la largeur de raie Raman de sorte qu'un spectre Stokes ressemble fortement à un spectre de pompe du fait du fonctionnement dans un régime de diffusion Raman cohérente ; moyennant quoi
le dispositif de conversion laser génère une sortie laser SLM décalée en fréquence par rapport à l'entrée de pompe laser.

100

5

3   6   4

1

2

L

Figure 1

7

1000

100

$D_1 \sim ROC$   $D_2 \sim f$   14

7   3

4

5   6

12

ROC

L

2   1

Figure 2

200

Figure 3

Figure 4

Figure 5

Figure 6

Figure 7

Figure 8

Figure 9

Figure 10

Figure 11

Figure 12

Figure 13

Figure 14(a)

Figure 14(b)

Figure 15(a)

Figure 15(b)

Figure 16(a)

Figure 16(b)

Figure 17

**Figure 18**

Figure 19

Deconvolved pump laser linewidth = 8.1 GHz

Figure 20(a)

Deconvolved output Stokes linewidth = 133 MHz

Figure 20(b)

Figure 21(a)

Figure 21(b)

Figure 22

Figure 23

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 103779766 A

**Non-patent literature cited in the description**

- **VASILI G SAVITISKI et al.** Steady-State Raman Gain in Diamond as a Function of Pump Wavelength. *IEEE JOURNAL OF QUANTUM ELECTRONICS, IEEE SERVICE CENTER PISCATAWAY*, 01 February 2013, vol. 49 (2), ISSN 0018-9197, 218-223

- **FEIGEL BENJAMIN et al.** Modeling and design of infrared and ultraviolet integrated diamond ring Raman lasers. *PROCEEDINGS OF SPIE*, vol. 10524, ISSN 0277-786X
- *SPIE*, 27 April 2016, vol. 9894, ISSN 978-1-5106-1533-5, 989414-989414